(19) Europäisches Patentamt
European Patent Office
Office européen des brevets

(11) Veröffentlichungsnummer: **0 179 233**
**B1**

# (12) EUROPÄISCHE PATENTSCHRIFT

(45) Veröffentlichungstag der Patentschrift: **08.03.89**

(51) Int. Cl.⁴: **F 02 C 3/02,** F 04 F 11/02

(21) Anmeldenummer: **85110933.0**

(22) Anmeldetag: **30.08.85**

(54) **Als Drucktauscher arbeitende Druckwellenmaschine, insbesondere zur Verwendung als Hochdruckverdichter für Gasturbinen.**

(30) Priorität: **28.09.84 CH 4670/84**

(43) Veröffentlichungstag der Anmeldung: **30.04.86 Patentblatt 86/18**

(45) Bekanntmachung des Hinweises auf die Patenterteilung: **08.03.89 Patentblatt 89/10**

(84) Benannte Vertragsstaaten: **AT CH DE FR GB IT LI SE**

(56) Entgegenhaltungen:
**CH-A-292 906**
**CH-A-315 430**
**CH-A-342 796**
**DE-C-1 110 811**
**GB-A-946 959**
**US-A-2 959 344**
**US-A-2 970 745**
**US-A-3 206 107**

**PROCEEDINGS OF THE INSTITUTION OF MECHANICAL ENGINEERS, Band 180, Teil I, Nr. 18, 1965-1966, Seiten 451-473, London, GB; P.H. AZOURY: "An introduction to the dynamic pressure exchanger"**

(73) Patentinhaber: **BBC Brown Boveri AG, Haselstrasse, CH- 5401 Baden (CH)**

(72) Erfinder: **Hellat, Jaan, Dr., Steinstrasse 22b, CH-5406 Baden- Rütihof (CH)**
Erfinder: **Keller, Jakob, Dr., Zelgmattstrasse 4, CH-8956 Killwangen (CH)**

**EP 0 179 233 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft eine als Drucktauscher arbeitende Druckwellenmaschine, insbesondere zur Verwendung als Hochdruckverdichter für Gasturbinen, nach dem Oberbegriff des Patentanspruchs 1.

Druckwellenmaschinen arbeiten entweder als Drucktauscher oder als Druckwandler. Letztere finden heutzutage vorwiegend als Druckwellenlader für Verbrennungsmotoren Verwendung. Bei ihnen ist die Menge $Q_L$ der verdichteten Luft gleich gross wie die Abgasmenge $Q_A$, durch Nachkompression wird die Luft dabei jedoch auf einen höheren Druck $p_3$ gebracht als der Abgasdruck $p_2$ vor dem Lader beträgt.

Beim Drucktauscher, der erstgenannten Bauart von Druckwellenmaschinen, wird hingegen eine Menge $Q_L$ kalter Luft von einem Anfangsdruck $p_1$ auf den Druck $p_2$ der heissen Abgase vor dem Eintritt in den Drucktauscher als Enddruck gebracht. Im gleichen Zeitraum wird die Menge $Q_A$ des heissen Abgases vom Anfangsdruck $p_2$ auf den Enddruck $p_1$ entspannt. Es findet also nur ein Druckaustausch statt und nicht eine Verdichtung der Luft über den Abgasdruck $p_2$ hinaus. Der nicht für eine solche zusätzliche Verdichtung auf $p_3$ wie beim Druckwandler beanspruchte Enthalpie anteil der heissen Abgase, die im Falle der Anwendung eines Drucktauschers bei einer Gasturbine zutreffender als Treibgase zu bezeichnen sind, wird bei einem Drucktauscher dazu benutzt, eine über die Luftmenge, die der Treibgasmenge $Q_A$ entspricht, hinausgehende, zusätzliche Luftmenge zu fördern. Die gesamte Luftmenge $Q_L$ ist also bei einem Drucktauscher grösser als die Treibgasmenge $Q_A$.

Die bisher verwendeten Indizes von $p_1$, $p_2$, $p_3$ kennzeichnen in Anlehnung an die bei Druckwellenmaschinen gebräuchliche Bezeichnungsweise das Druckniveau von Abgas und Luft. Für die Niederdruckseiten von Luft und Abgas gilt bei Druckwandler und Drucktauscher der Index 1. Beim Drucktauscher gilt der Index 2 für die Hochdruckseite sowohl des Abgases als auch der Luft, wogegen beim Druckwandler für das Hochdruckgas zwar auch der Index 2 gilt, für die Hochdruckluft jedoch der Index 3, der ausdrückt, dass wegen der Nachkompression dieser Druck $p_3 > p_2$ ist.

Um den Ort zu definieren, an dem der betreffende Druck herrscht, werden den Symbolen $p_1$ und $p_2$ weitere Indizes V und N angefügt, wobei V und N für "Vor" bzw. "Nach" der Druckwellenmaschine stehen. Für den höchsten, bei einem Druckwandler vorkommenden Druck $p_3$ ist dies nicht erforderlich, da er allein vorkommt und eindeutig definiert ist.

Diese weiteren Indizes V und N beziehen sich also jeweils auf die Eintritts bzw. Austrittsseite der beiden Medien Luft und Abgas. Demnach ist $p_{1V}$ der Druck der in die Druckwellenmaschine eintretenden Luft (Niederdruckluft), $p_{1N}$ der Druck des entspannten Abgases am Austritt (Niederdruckgas), $p_{2V}$ der Abgasdruck vor und, beim Drucktauscher, $p_{2N}$ der Luftdruck nach der Druckwellenmaschine (Hochdruckgas bzw. Hochdruckluft). Beim Druckwandler tritt an die Stelle von $p_{1V}$ der Ladedruck $p_3$. Da beim Drucktauscher wie beim Druckwandler $p_{1V} \approx p_{1N}$ gilt, beim Drucktauscher auch $p_{2V} < p_{2N}$, beim Druckwandler hingegen $p_{2V} < p_3$, so lassen sich die beiden Bauarten von Druckwellenmaschinen, wenn man die Indizes V und N weglässt und bei beiden Bauarten anstelle von $p_{2N}$ das symbol $p_3$ verwendet, durch das Verhältnis der Drücke und Luft- bzw. Abgasmengen wie folgt charakterisieren:

| Druckwandler | Drucktauscher |
|---|---|
| $p_1 < p_2 < p_3$ | $p_1 < p_2 = p_3$ |
| $Q_A = Q_L$ | $Q_A < Q_L$ |

Beim Druckwandler ist der Quotient $p_3/p_2$ ein Mass für den Wirkungsgrad, beim Drucktauscher ist das entsprechende Mass der Quotient $Q_L/Q_A$. Der Drucktauscher ist eine Gleichdruck-Druckwellenmaschine und kommt als solche für konventionelle Anwendungen, d.h. als Druckwellenlader, nicht in Betracht, weil er einen Überschuss an komprimierter Luft liefert. Diese Eigenschaft macht ihn hingegen als Hochdruckverdichter bei Gasturbinen besonders geeignet. Da er, wie auch konventionelle Kompressoren von Gasturbinen, normalerweise nur bei einer bestimmten Drehzahl und Last, d.h. bei einer festen Temperaturverteilung, arbeitet, lässt sich der Druckwellenprozess genau auf diesen Betriebszustand abstimmen. Es treten dabei keine vagabundierenden Wellen auf, die mit den bekannten Taschen im Luft- und im Gasgehäuse abgefangen werden müssen. Die Spülzone und die Ladezone in den Zellen des Rotors lassen sich praktisch ideal auslegen, da nur eine Expansionswelle von der Abgas- zur Luftöffnungskante und nur eine Verdichtungswelle von der Abgas- zur Luftschliesskante auftritt.

Als einschlägiger stand der Technik können in diesem Zusammenhang die in der DE-C-1 110 811 und in der CH-A-342 796 beschriebenen Drucktauscher und die in der US-A-2 959 344 beschriebene, nach dem Gegenstromprinzip arbeitende Druckwellenmaschine genannt werden. Beim erstgenannten Drucktauscher handelt es sich um einen Gaserzeuger für einen Nutzdruckgasverbraucher, wobei in der Niederdruckspülzone die Ein- und Auslaßstutzen ausserhalb des Zellenrotors über eine geschlossene Umlaufleitung mit einer Kühlvorrichtung, in der das Niederdruckgas gekühlt wird, miteinander verbunden sind. In Verbindung mit einer speziellen gegenseitigen Anordnung der Öffnungs- und Schliesskanten an den Ein- und Auslaßstutzen in der Spülzone soll damit der Arbeitsaufwand für die Niederdruckspülung verringert werden.

Der Frischlufteinlass ist dabei getrennt von der Niederdruckgasspülung nach dieser vorgesehen, wobei die Schliesskante des Frischlufteinlaßstutzens, in der Drehrichtung des Rotors gesehen, nach der Schliesskante des Spülauslaßstutzens für das entspannte Gas angeordnet ist.

Die CH-A-342 796 offenbart einen Drucktauscher, dessen Gas- und Luftkanäle so bemessen und angeordnet

sind, dass bei Sollbetriebsbedingungen in den Rotorzellen ein wenigstens angenähert zentriertes Wellensystem auftritt, das über die einander benachbarten Kanäle in den feststehenden Gehäuseteilen verteilt ist. Durch eine vor einer Haupteinlassöffnung vorgesehene Hilfseinlassöffnung, die von den Zellen vor der Haupteinlassöffnung passiert wird und aus welcher der Inhalt der jeweils ankommenden Zelle zunächst vorkomprimiert und erst im Bereich der Haupteinlassöffnung fortschreitend auf den Enddruck verdichtet wird, vermeidet man das Auftreten einer stosswelle im Bereich der Haupteinlassöffnung wie sie andernfalls ohne die Hilfseinlass öffnung auftreten würde und erreicht damit eine Verbesserung des Wirkungsgrades.

Die genannte US-A-2 959 344 hat eine nach dem Gegenstromprinzip arbeitende Druckwellenmaschine zum Gegenstand, bei der die schliesskantengeometrie im Niederdruckspülbereich formal jener bei der vorliegenden Erfindung entspricht. Ihr Arbeitszyklus ist jedoch kein reiner Drucktauscherzyklus im Sinne der vorliegenden Erfindung

Zum Unterschied von diesen aus der Patentliteratur bekannten Druckwellenmaschinen entstand die vorliegende, im Patentanspruch 1 definierte Erfindung entstand aus der Aufgabe, eine Druckwellenmaschine mit einem Zyklus für Gleichdruckaufladung zu schaffen, die sich insbesondere als Hochdruckverdichterteil einer stationären Gasturbine anstelle konventioneller Axialoder Radialverdichter eignet und bei der die geometrischen Bestimmungsstücke der Steuerkanten, Steuerkanäle und des Zellenrotors auf einen vorgegebenen stationären Lastzustand optimiert sind. Bei einer bevorzugten Ausführungsform ist die Brennkammer koaxial innerhalb der Hochdruckstufe der Druckwellenmaschine angeordnet. Dadurch erhält man extrem kurze, verlustarme Luft- und Gaskanäle.

Die Erfindung wird im folgenden anhand von in der Zeichnung dargestellten Ausführungsbeispielen von Gleichdruck-Druckwellenmaschinen, im folgenden kurz Drucktauscher genannt, beschrieben, bei denen die Gas- und Luftkanäle, die relative Lage ihrer Öffnungs- und Schliesskanten zueinander sowie ihre Dimensionierung gemäss der Lehre nach der vorliegenden Erfindung ausgeführt sind. Weiters wird die erwähnte, speziell zum Zusammenwirken mit einer Gasturbine vorteilhafte Konzeption mit einer koaxial innerhalb eines mehrstufigen Drucktauschers angeordneten Brennkammer beschrieben.

In den Zeichnungen stellen dar:

| | |
|---|---|
| Fig. 1 | ein Prinzipschema einer Gasturbinenanlage mit einem Drucktauscher als Hochdruckverdichter, einem konventionellen Axialverdichter als Niederdruckteil und einer zweistufigen Turbine, |
| Fig. 2 | schematisch einen Axialschnitt durch einen mehrstufigen Drucktauscher für eine Gasturbinenanlage mit einer zentral innerhalb des Drucktauschers angeordneten Brennkammer, die |
| Fig. 3 und 4 | schematisch achsnormale Querschnitte durch den in Fig. 2 dargestellten Drucktauscher, |
| Fig. 5 | schematisch die Anordnung und Dimensionierung der Kanäle für einen ersten erfindungsgemässen Drucktauscherzyklus, |
| Fig. 6 | das gleiche für einen zweiten, vorteilhaften Drucktauscherzyklus gemäss der Erfindung, |
| Fig. 7 | ein Beispiel für die vorteilhafte Ausbildung der Zellenwände und der Gehäusegeometrie eines Drucktauschers nach der vorliegenden Erfindung, und die |
| Fig. 8 | eine vorteilhafte Variante des in Fig. 2 dargestellten Drucktauschers. |

Bei der in Fig. 1 schematisch dargestellten Gasturbinenanlage liefert ein Niederdruckverdichter 1 vorverdichtete Luft über eine Niederdruckluftleitung 2 in einen Drucktauscher 3. Um die mit einem mechanischen Antrieb verbundenen Verluste zu vermeiden, wird man die Rotorzellen dieses Drucktauschers vorteilhaft mit schräg zur Rotorachse angeordneten Zellenwänden oder einer speziellen Beschaufelung versehen, so dass der Antrieb direkt durch die Ablenkung der Gasströmung erfolgt.

Bei 1V tritt die Niederdruckluft in den Drucktauscher 3 ein, bei 2N tritt sie, auf den Druck der bei 2V eintretenden Treibgase verdichtet, aus. Wie eingangs gesagt, fördert der Drucktauscher eine Luftmenge, die grösser ist als die energieabgebende Treibgasmenge, die bei 2V mit Hochdruck eintritt. D.h., dass der Drucktauscher mehr Luft verdichtet als er zur Erzeugung der Treibgasmenge benötigt, mit der die bei 2N austretende Luftmenge vom Druck $p_1$ am Eintritt 1V auf den Treibgasdruck $p_2$ bei 2N verdichtet wird. Dies kann mit den eingangs verwendeten Symbolen $Q_A$ und $Q_L$ für die Treibgas- bzw. Luftmenge und mit $Q_L'$ für die Luftmenge zur Erzeugung der Treibgase und $Q_L''$ für die frei verfügbare Luftmenge ausgedrückt werden durch

$$Q_A < Q_L = Q_L' + Q_L''.$$

Die beiden Teilluftmengen $Q_L'$ und $Q_L''$ sind in Fig. 1 durch die entsprechenden Pfeile angedeutet.

$Q_L'$ gelangt in eine Drucktauscherbrennkammer 4, in der der Kraftstoff bei konstant hoher Temperatur verbrannt wird. Die Brennkammer 4 und der Drucktauscher 3 werden also bei konstanten Betriebsbedingungen und hoher Treibgastemperatur betrieben.

Die Treibgasmenge $Q_A$ wird im Drucktauscher 3 von ihrem Eintrittsdruck $p_2$ bei 2V auf ihren Austrittsdruck $p_1$ bei 1N entspannt und gelangt dann durch eine Niederdrucktreibgasleitung 5 in die Niederdruckstufe 8 einer zweistufigen Gasturbine 6, wo sie den aus der Hochdruckstufe 7 kommenden, teilentspannten Hochdrucktreibgasen beigemischt werden. Diese werden durch Verbrennung von Kraftstoff mit der Teilluftmenge $Q_L''$ in einer Turbinenbrennkammer 9 erzeugt und der Hochdruckstufe 7 zugeführt.

Ein Vorteil von Drucktauschern als Luftverdichter bei Gasturbinenanlagen beruht in erster Linie darauf, dass

sie sich selbst kühlen, weil ihre Rotorzellen abwechselnd von den heissen Treibgasen und vergleichsweise kalter Luft durchströmt werden. Die Zellenwände erwärmen sich dabei nur auf eine mittlere Temperatur, die erheblich niedriger liegt als die Temperatur der Treibgase. Die Treibgastemperaturen dürfen daher erheblich höher sein als die zulässigen Grenztemperaturen der für den Rotor des Drucktauschers verwendeten Werkstoffe. Bei Verwendung hochtemperaturfester Werkstoffe für den Rotor ist es daher möglich, den Kraftstoff in der Drucktauscherbrennkammer 4 bei stöchiometrischem Kraftstoff/Luft-Verhältnis mit optimalem Wirkungsgrad zu verbrennen. Nur der relativ geringe Kraftstoffanteil, der der Turbinenbrennkammer 9 zugeführt wird, müsste mit Rücksicht auf die zulässigen Grenztemperaturen für die Werkstoffe der kontinuierlich hochtemperaturbeanspruchten Turbinenbeschaufelung mit dem üblichen starken Luftüberschuss verbrannt werden.

Bei der in Bild 1 gezeigten Konzeption einer Gasturbinenanlage treibt die Gasturbine 6, wenn man von der Leerlaufleistung absieht, nur den Niederdruckverdichter 1 und einen nicht dargestellten Generator an. Der durch die überstöchiometrische Verbrennung in der Turbinenbrennkammer 9 bedingte, gegenüber dem aus dem Drucktauscher kommenden Treibgas $Q_A$ schlechtere Wirkungsgrad betrifft hier also nur einen Teilprozess der Gasturbine. Dieser Teilprozess lässt sich für eine vorgegebene Generatorleistung weiter reduzieren, wenn die Verdichtung des ganzen Luftbedarfs der Turbine durch einen, vorzugsweise mehrstufigen, Drucktauscher bewerkstelligt wird. In diesem Falle betrifft der wirkungsgradmässig ungünstigere Turbinenprozess nur die zum Generator- und Eigenantrieb erforderliche Leistung, da auch der Niederdruckverdichter wegfällt.

Ein Beispiel für einen solchen mehrstufigen Drucktauscher zeigen schematisch die Fig. 2, 3 und 4. Es handelt sich dabei um eine vierstufige Ausführung, mit der man z. B. mit einem Druckverhältnis je Stufe von ca. 1 : 2 auf ein Gesamtdruckverhältnis von 1 : 16 kommt. Durch diese Stufung, die fast einer adiabatischen Kompression entspricht, werden starke Stosswellen und der damit verbundene starke Entropieanstieg vermieden. Die Längen und Zellenbreiten der einzelnen Rotoren wären proportional zu ihren mittleren Radien und die Drehzahlen idealerweise umgekehrt proportional zu den mittleren Radien der Rotoren.

Für eine angenommene elektrische Leistung von 100 MW würde bei dieser Konzeption der Radius des äussersten Rotors etwa 1,5 m betragen und seine Drehzahl ca. 300 l/min. Das ganze Gebilde würde sich fast wie ein Potentialwirbel drehen, d. h., dass ein Teilchen, das von einem Rotor in den nächstinneren umgelenkt wird, praktisch kaum eine Änderung seines Drehimpulses erfährt. Die mit einer Änderung des Drehimpulses verbundenen Verluste wären sehr klein. Weil, wie später gezeigt wird, die Mediengrenzen in den Rotorzellen sehr steil verlaufen, ergäbe sich in den beiden Gehäuseteilen, die den beiden Rotorstirnseiten benachbart sind, sehr günstige kleine Umlenkwinkel von ca. 60°. Wegen der gegenüber konventionellen Verdichtern niedrigen Drehzahlen sind auch die Zentrifugalkräfte klein, so dass auch die Herstellungskosten relativ günstig wären. Im Gegensatz zu den klassischen Verdichtern treten beim mehrstufigen Drucktauscher wegen der niedrigeren Machzahlen auch kleinere Strömungsverluste auf und ebenso sind die Leckverluste kleiner.

In Fig. 2 bezeichnet 10 die geometrische Drehachse des mehrstufigen Drucktauschers.

Koaxial dazu ist eine Drucktauscherbrennkammer 11 angeordnet, die durch einen feuerfesten Isoliermantel 12 gegen den ihn koaxial umgebenden Drucktauscher thermisch abgeschirmt ist. Den Boden der Brennkammer bildet eine Drucktauscherluftkammer 13, durch welche die aus der Endstufe des Drucktauschers abströmende Luftmenge $Q_L'$ in die Brennkammer 11 eintritt. Über einen Drucktauscherbrenner 14 in der Mitte der Luftkammer 13 wird Kraftstoff im stöchiometrischen Verhältnis zu $Q_L'$ eingespritzt, wobei die Verbrennung die Treibgase zur Verdichtung der Luftmenge $Q_L$ erzeugt, deren Anteil $Q_L'$ der Drucktauscherbrennkammer 11 und deren Anteil $Q_L''$ einer Turbinenbrennkammer 15 zugeführt wird, und zwar über eine Turbinenluftleitung 16 und eine Turbinenluftkammer 17, die von einem zur Turbinenachse koaxialen Turbinenbrenner 18 durchsetzt wird. Entsprechend der zulässigen Treibgastemperatur für die Beschaufelung der Turbine 19, die ihre Leistung an einen Generator 20 abgibt, wird der Kraftstoff in der Turbinenbrennkammer 15 mit einer überstöchiometrischen Luftmenge verbrannt. Die Turbinenbrennkammer ist in fluchtender Verlängerung des Turbinengehäuses vorgesehen, wodurch die Anlage gegenüber der üblichen Bauart mit einem Heissgasgehäuse bei gleicher Leistung kleiner, kompakter, einfacher und billiger ausfällt.

Da, wie schon erwähnt, gegenüber einer Gasturbine mit starr gekuppeltem Verdichter ein relativ geringerer Anteil des Kraftstoffes überstöchiometrisch verbrannt wird, ist es durchaus möglich, mit der hier vorgeschlagenen Bauart Wirkungsgrade zu erzielen, die an jene von Dampfturbinenanlagen herankommen. Die Leistung ist bei einer solchen Anlage nicht mehr vom Verdichter her begrenzt.

Die in der Drucktauscherbrennkammer 11 erzeugten Treibgase, deren Flussrichtung die voll ausgezogenen Strömungspfeile andeuten, verdichten in vier koaxialen Zellenrotoren 21, 22, 23 und 24 die durch einen Luftansaugkanal 25 unter dem Anfangsdruck eintretende Luft auf einen Druck, der in der Drucktauscherluftkammer 13 gleich ist dem Druck der Treibgase am Ende des, in Flussrichtung der Luft gesehen, letzten, innersten Zellenrotors 24, der den Isoliermantel 12 umgibt. Diese Bezugszahlen sind jeweils in beiden Schnittfiguren dieser Rotoren, bestehend aus je zwei parallelen Linien, eingetragen. Die Umlenkung der Treibgase aus der Brennkammer 11 in den innersten Zellenrotor 24, aus diesem in den nächstfolgenden Zellenrotor 23 usw. bis in den äussersten Rotor 21 erfolgt an den Stirnseiten der beiden Steuergehäuse 26 und 32 in Gasüberströmkanälen 27, 35, 29, 33, dies in der Reihenfolge, wie sie nacheinander von dem sich in den Zellen der Rotoren entspannenden Gas von innen nach aussen bis zum Treibgasaustrittsstutzen 31 durchlaufen werden. Die oberen Stirnseiten der Rotoren 21 - 24 liegen alle in einer Ebene, ihre unteren Stirnseiten wegen der unterschiedlichen Rotorlängen in verschiedenen Ebenen, weshalb das untere Steuergehäuse 32 komplizierter ist als das obere Steuergehäuse 26. Die durch den Luftansaugkanal 25 eintretende Luft, deren

Flussrichtung durch die strichliert gezeichneten Strömungspfeile angedeutet ist, wird im Rotor 21 vorverdichtet, gelangt aus diesem über einen ersten Luftüberströmkanal 30 zur weiteren Verdichtung in den zweiten Rotor 22, aus diesem über einen zweiten Luftüberströmkanal 34 in den Rotor 23 als dritter Verdichterstufe, und schliesslich über einen dritten Überströmkanal 28 zur Endverdichtung in den innersten Rotor 24. Die Endverdichtung bzw. der vollständige Druckaustausch zwischen Treibgas und Luft ist erreicht am Austritt der Luft aus dem Rotor 24, d.h., da, wo sich die auf den Enddruck komprimierte Luftmenge $Q_L$ aufspaltet in die erste Teilluftmenge $Q_L'$ für die Aufrechterhaltung der Treibgaserzeugung in der Brennkammer 11 und in die zweite Teilluftmenge $Q_L''$, die über die Turbinenluftleitung 16 in die Turbinenluftkammer 17 gelangt, um in der Turbinenbrennkammer 15 durch Verbrennung einer regulierbaren, vom Turbinenbrenner 18 gelieferten Brennstoffmenge Hochdrucktreibgas zu erzeugen, das dem Hochdruckteil 36 der Gasturbine zugeführt wird. Die aus dem Treibgasaustrittsstutzen 31 strömenden, teilentspannten Niederdrucktreibgase gelangen über eine Verbindungsleitung 38 zwischen dem Treibgasaustrittskanal 31 und einer Eintrittsspirale 39 der Gasturbine in deren Niederdruckteil 37. Von dieser Verbindungsleitung 38 ist nur das in die Eintrittsspirale übergehende Stück dargestellt. Im Niederdruckteil 37 vermischen sich die bereits teilentspannten Hochdrucktreibgase mit den teilentspannten Niederdrucktreibgasen, Nach der Arbeitsleistung in der Turbine 19 treten die auf den Umgebungsluftdruck oder auf einen sonstigen Gegendruck entspannten Treibgase am Abgasstutzen 40 aus.

Die Fig. 3 und 4 zeigen schematisch die Lage der Gasüberströmkanäle entsprechend den in Fig. 2 eingetragenen Schnittverläufen III-III bzw. IV-IV. Demnach ist die Fig. 3 eine Draufsicht auf das Rotorgehäuse 40a des Drucktauschers mit den Rotoren 21 - 24. Die Lage der Gasüberströmkanäle ist hier strichpunktiert eingezeichnet, was anzeigen soll, dass sich diese Überströmkanäle im darüber befindlichen, hier aber abgehoben gedachten oberen Steuergehäuse 26 befinden. Wie in Fig. 2 bedeuten hier die voll ausgezogenen Strömungspfeile die Flussrichtung der Treibgase und die strichlierten Strömungspfeile die Flussrichtung der Luft. Der Einfachheit halber sind die Mündungsquerschnitte der Überströmkanäle, die sich im oberen und unteren Steuergehäuse 26 bzw. 32 befinden, sich überdeckend und kongruent gezeichnet, während sie sich in Wirklichkeit bezüglich Grösse und Lage unterscheiden.

Eine Druntersicht desselben, gesehen in der Richtung IV-IV von Fig. 2, ist in Fig. 4 dargestellt. In dieser Figur sind die Umrisse des oberen Steuergehäuses 26 des Drucktauschers wegen der einander entgegengesetzten Projektionsrichtungen von III-III und IV-IV seitenverkehrt. Diese Fig. 4 zeigt auch den Schnittverlauf II-II, dem die Darstellung in Fig. 2 entspricht. Hier ist zu bemerken, dass zwischen der Fig. 2 einerseits und den Fig. 3 und 4 andererseits keine exakte Zuordnung im Sinne der zeichnerischen Normalprojektion besteht. Die voll ausgezogenen Strömungspfeile beziehen sich wiederum auf das Treibgas, die strichlierten Strömungspfeile auf die Luft.

Die strichpunktierten Kreise stellen die zu den Rotoren gehörigen Mantelrohre und Nabenrohre 21m bzw. 21n, 22m bzw. 22n, 23m bzw. 23n und 24m bzw. 24n dar. Ausserdem sind in dieser Figur in jedem der Rotoren auch einige Zellenwände strichpunktiert eingetragen, von denen jene des Zellenrotors 21 mit 21z bezeichnet sind.

Der Verlauf der Gasüberströmkanäle 27 - 30 an der Basis, d.h., in der durch den Schnitt IV-IV von Fig. 2 gegebenen Ebene, ist durch die S-förmig geschwungenen Vollinien angedeutet. Am Anfang dieser Überströmkanäle ist, in der durch die Pfeile angedeuteten Durchströmungsrichtung der Rotoren gesehen, ein Austrittskanal für das im betreffenden inneren Rotor teilentspannte Gas vorgesehen, und am Ende dieser Überströmkanäle befindet sich ein Eintrittskanal, durch den dieses Gas in den benachbarten äusseren Rotor eintritt, um dort, indem es die im Gegensinn durch die Rotoren strömende Luft verdichtet, weiter entspannt zu werden. Der Übersichtlichkeit halber sind diese Kanäle in Fig. 4 nur an den Übergängen vom Rotor 23 in den Rotor 22 und zwischen diesem und dem äussersten Rotor 21 mit 41, 42, 43 bzw. 44 bezeichnet.

Das Gas, das im äussersten Rotor 21 die durch den Luftansaugkanal 25 in diesen Rotor eintretende Luft vom Anfangs druck vorverdichtet, verlässt den Rotor durch den Austrittskanal 45, von wo es über den Treibgasaustrittsstutzen 31 und die erwähnte, aus Fig. 2 ersichtliche Verbindungsleitung 38 dem Niederdruckteil 37 der Gasturbine 19 zuströmt.

In gleicher Weise sind im unteren Steuergehäuse 32 der Luftüberströmkanal 34 und die entsprechenden Aus- und Eintrittskanäle für die Luft, welche die Rotoren gegensinnig zum Gas durchströmt, angeordnet, mit dem Unterschied, dass der Luftüberströmkanal und auch die einander zugeordneten Aus- und Eintrittskanäle in verschiedenen Ebenen liegen und, wie bereits oben erwähnt, das untere Steuergehäuse demgemäss komplizierter geformt ist. Die letzte Stufe der Verdichtung erfährt die Luft im innersten Rotor 24, wo sie im Bereich des Pfeiles $Q_L' + Q_L''$ austritt und sich in die Menge $Q_L'$ für die Drucktauscherbrennkammer und in die Menge $Q_L''$ für die Turbinenbrennkammer verzweigt.

Auf die Lagerung und den Antrieb der Rotoren braucht hier nicht eingegangen zu werden, da hiefür dem Konstrukteur bewährte Elemente und Konzeptionen der Lager- und Antriebstechnik zur Auswahl stehen. Um grösstmögliche Freizügigkeit in der gegenseitigen Anordnung von Gasturbine und Drucktauscher zu erhalten, wird man vorzugsweise versuchen, einen Eigenantrieb der Rotoren durch die in der Drucktauscherbrennkammer 11 erzeugten Treibgase selbst zu verwirklichen, beispielsweise durch zur Richtung der Rotordrehachse geneigt angeordnete Zellenwände. In Frage kämen auch ausserhalb des Rotorgehäuses auf der Rotorwelle befestigte Schaufelkränze, die mit vom Hauptstrom $Q_L$ abgezweigtem Treibgas beaufschlagt werden, ferner bekannte elektrische, hydraulische und pneumatische Antriebsmittel. In allen Fällen ist, wie auch bei einem rein mechanischen Antrieb, z. B. mittels Riemen, sicherzustellen, dass die

Drehzahlen der Rotoren in einem Verhältnis zueinander stehen, bei dem der Übergang des Gas- bzw. Luftstromes aus einem in den nächsten Rotor möglichst stossfrei und unter kontinuierlicher Volumen- und Druckänderung vor sich geht. Die einzelnen Rotoren nehmen also gleiche Luft- beziehungsweise Gasmassenströme auf. In diesem idealen Fall wären die Drehzahlen umgekehrt proportional zu den mittleren Rotorradien und die Längen der einzelnen Rotoren und ihre Zellenbreiten proportional zu den mittleren Rotorradien.

Um die eingangs erwähnte Erfindungsaufgabe, d.h., einen für eine Gleichdruckaufladung vorteilhaften Arbeitszyklus des Drucktauschers zu realisieren, sind die geometrischen Bestimmungsstücke der luft- und gasseitigen Ein- und Austrittskanäle so zu dimensionieren, dass gewisse störende Erscheinungen vermieden werden, die bei früher vorgeschlagenen Drucktauschern und bei dem für die Aufladung von Motoren üblichen Druckwandlerprozess auftreten und einen wirkungsvollen Gleichdruckprozess unmöglich machen.

Zunächst sei noch auf ein Problem hingewiesen, das bei herkömmlichen Drucktauschern zwangsläufig auftritt. Bei der gegenständlichen Anwendung eines Drucktauschers expandiert heisses Treibgas, also ein Medium, das eine geringere Dichte als Luft von atmosphärischem Druck aufweist, und komprimiert dabei diese kalte Luft grösserer Dichte. Bei diesem Druckaustausch handelt es sich um einen Impulsaustauschprozess, bei dem der Dichteunterschied zwischen den beiden Medien mit Hilfe eines geeigneten Geschwindigkeitsunterschiedes oder mit Druckkräften, die von den Gehäusen aufgeprägt werden, kompensiert werden muss. Weil nun aber bei Drucktauschern

$$p_{1V} \approx p_{1N} \text{ und } p_{2V} \approx p_{2N}$$

wobei, wie eingangs erwähnt, p den Druck bezeichnet und sich die Indices "1V" auf den Lufteintritt (Niederdruck), "1N" auf den Gasaustritt (Niederdruck), "2V" auf den Gaseintritt (Hochdruck) und "2N" auf den Luftaustritt (Hochdruck) beziehen, sind auch die Geschwindigkeiten an den Enden von Lade- und Spülzone etwa gleich:

$$u_{1V} \approx u_{1N} \text{ und } u_{2V} \approx u_{2N}.$$

Bei konventionellen Drucktauschern besteht deshalb die Notwendigkeit, den dichtebedingten Unterschied zwischen den Impulsänderungen von Luft und Treibgas mit Druckkräften aufzufangen, die von den Gehäusen aufgeprägt werden. Beim Druckwandler besteht dieses Problem in der Regel nicht, weil die Drücke und damit auch die Geschwindigkeiten an den beiden Enden von Spül- und Ladezone erheblich verschieden sind.

Wegen dieser unterschiedlichen Drücke an den Enden von Spül- und Ladezone ergibt sich aber die Notwendigkeit, dass Spül- und Ladezone von jeweils mindestens einer Kompressions- oder Expansionswelle durchkreuzt werden. Daher wird in solchen Fällen auch die Mediengrenze zwischen Luft und Treibgas von Druckwellen getroffen. Weil die Dichte des Treibgases bedeutend geringer ist als die Dichte der Luft, wird eine Druckwelle beim Auftreffen auf die Mediengrenze zu einem wesentlichen Teil reflektiert und dadurch die Mediengrenze abgelenkt oder sogar umgelenkt. Aus diesem Grund ist eine genaue Abstimmung des Druckwellenprozesses nicht möglich, falls die Mediengrenze von Druckwellen gekreuzt wird. Es treten "vagabundierende Wellen" auf. Ausserdem führen Wechselwirkungen zwischen Druckwellen und Mediengrenze zu stark ungleichförmigen Geschwindigkeitsprofilen $u_{1N}$ und $u_{2N}$ und verursachen auch eine deutliche Verstärkung der Durchmischung von Luft und Abgas, d.h., eine Verbreiterung der Medientrennschicht.

Um also einen für die gegenständliche Anwendung geeigneten Gleichdruck-Drucktauscherprozess zu erhalten, ist es wesentlich, dass keine Kreuzungen zwischen Druckwellen und Mediengrenzen auftreten. Dies wird gemäss einer ersten Variante für die Gestaltung der Kanäle und Schliesskanten in den beiden Steuergehäusen erreicht durch Einhaltung der in Fig. 5 angegebenen geometrischen Parameter für die Kanäle 1V und 1N, wobei die Gehäusegeometrie wie üblich in die Ebene abgewickelt dargestellt ist. In dieser Fig. 5 bedeuten, wie schon eingangs erwähnt, 1V den Eintrittskanal der Niederdruckluft, 2V den Eintrittskanal des Hochdrucktreibgases, 1N den Austrittskanal für das in den Rotorzellen der betreffenden Verdichterstufe entspannte Treibgas und 2N den Austrittskanal für die verdichtete Luft. L ist die Rotorbreite, d.h., auch die Länge der Zelle 45. Der Pfeil V deutet die Drehrichtung des Rotors an.

Ein grundsätzlicher Unterschied dieser Konzeption gegenüber den geometrischen Verhältnissen bei einem bekannten Vorschlag für die gegenseitige Anordnung der luft- und gasseitigen Steuerungskanten besteht darin, dass die Schliesskante 46 des Kanals IV früher mit einer bestimmten Zelle in Kontakt kommt als die Schliesskante 47 von 1N. Bei dem erwähnten früheren Vorschlag ist das umgekehrte der Fall; dort kommt die Schliesskante von 1N früher mit der betreffenden Zelle in Berührung als die Schliesskante von 1V. Dabei geht von der Schliesskante 1N eine Kompressionswelle aus und trifft auf die Schliesskante 1V. Bei der Anordnung nach Bild 5 hingegen ist die von 46 zu 47 laufende Welle 52 eine Expansionswelle.

In der Gehäusegeometrie nach Fig. 5 sind die Schliesskanten von 2V und 2N mit 48 bzw. 49 und die Öffnungskanten von 1V und 1N mit 50 bzw. 51 bezeichnet. Setzt man die Strecke 51-47=A, die Strecke 50-46=B und, in Umfangsrichtung gesehen, 51-50=D, so gilt, wie eingehende Untersuchungen in Frage kommender Drucktauscherzyklen ergeben haben, für die oben gestellte Bedingung, dass Mediengrenzen nicht von Druckwellen gekreuzt werden dürfen, der Zusammenhang A-D>B.

Wird diese Bedingung, wie bei den früher vorgeschlagenen Geometrien, verletzt, so kommt es zwangsläufig

zur Reflexion von Druckwellen, zu Kreuzungen derselben mit Mediengrenzen und damit zu den obenerwähnten Problemen bei herkömmlichen Drucktauscherzyklen. Bei dem erwähnten früheren Vorschlag, bei dem die der Welle 52 entsprechende Welle eine Kompressionswelle ist, dürften, wie eine genauere Untersuchung zeigt, in den Zonen von 2V bis 2N keine Druckwellen auftreten, was natürlich widersinnig ist, und das Druckverhältnis über den Wellen 53, 54 und 55 von Fig. 5 entsprechen, bliebe unverändert. Die Welle 53 ist eine Kompressionswelle, die Wellen 54 und 55 Expansionswellen

Die gasdynamische Berechnung des Drucktauscherprozesses für die Gehäusegeometrie nach Fig. 5 ergibt für die Wellenlaufzeiten die folgenden geometrischen Abstimmbedingungen:

Welle 53: $\frac{V}{u_s} = \frac{d}{L}$ (1),

Mediengrenze 2V-2N: $\frac{V}{u_2} = \frac{b+d}{L}$ (2),

Welle 54: $\frac{2V}{c_{2V}+u_2+c_{21}} = \frac{b+d-a}{L}$ (3),

Welle 55: $\frac{2V}{c_{21}+c_{1N}-u_1} = \frac{D}{L}$ (4),

Mediengrenze 1V-1N: $\frac{V}{u_1} = \frac{A-D}{L}$ (5),

Welle 52: $\frac{2V}{c_{1V}+u_1+c_{12}} = \frac{A-B-D}{L}$ (6),

wobei für die Expansionswellen jeweils die mittlere Laufzeit verwendet wurde. Die Beziehungen (1) - (6) bestimmen nun den gesamten Prozess.

In ihnen bedeuten:

V die Relativgeschwindigkeit der Rotorzellen gegenüber dem Gehäuse,
$u_s$ die Ausbreitungsgeschwindigkeit der Stosswelle,
u die relative Strömungsgeschwindigkeit der Medien, bezogen auf die Zellen, an den Enden von Lade- und Spülzone, und
c die Schallgeschwindigkeit,

wobei die Indizes dieser Grössen sich jeweils auf die aus Fig. 5 ersichtlichen Bereiche beziehen, von denen die Bezeichnungen für die Bereiche 12 und 21 zur Unterscheidung von den früher verwendeten Bezugszahlen 12 und 21 eingeringelt sind. Für die Grössen, die in den Bereichen 1V und 1N oder 2V und 2N gleiche Werte aufweisen, wird jeweils nur der Index 1 bzw. 2 verwendet.

Die geometrischen Grössen in den Fig. 5 und 6 haben folgende Bedeutung:

A = Länge der Niederdrucktreibgaskanäle 1N,
B = Länge der Niederdruckluftkanäle 1V,
D = Abstand der Öffnungskante 51 des Niederdrucktreibgaskanals 1N von der Öffnungskante 50 des Niederdruckluftkanals,
S = Stegbreite zwischen 2V und 1N,
a = Länge der Hochdrucktreibgaskanäle 2V,
b = Länge des Hochdruckluftkanals 2N, und
d = Länge des Hochdrucktreibgaskanals 2V.

Die Geschwindigkeitsgrössen in den Gleichungen (1) - (6) erhält man aufgrund gasdynamischer Gesetze bei vorgegebenen Leistungsdaten des Drucktauschers und bekannten thermodynamischen zuständen von Luft und Gas.

Der Druckwellenzyklus mit der in Fig. 5 dargestellten Gehäusegeometrie ist zwar für die Anwendung eines Drucktauschers als Oberstufe einer Gasturbine wesentlich günstiger als früher vorgeschlagene und praktisch untersuchte Zyklen. Er weist allerdings noch einige Nachteile auf:

- Die bei 1V zugeführte Luft wird zuerst von einer Expansionswelle verdünnt, bevor sie von einer sehr starken Stosswelle auf den Druck $p_2$ verdichtet wird.
- Es treten breite Stege an den Gehäusen auf. Die Folgen davon sind ein starker Wärmeaustausch, unnötig hohe Leckverluste und eine relativ niedrige Leistungsdichte.
- Es besteht keine Symmetrie in bezug auf die thermische Belastung des Rotors.

Der erstgenannte Nachteil lässt sich ohne prinzipielle Änderung des Zyklus beheben. Die Gehäusestege, welche die Wellen 52 und 53 trennen, können durch Zwischenwände ersetzt werden, deren Breite mit einer Zellbreite vergleichbar ist. In diesem Fall werden die Expansionswelle 52 und die starke Kompressionswelle 53 zu einer schwächeren Kompressionswelle mit dem Druckverhältnis $p_2/p_1$ vereinigt. Mit anderen Worten: Die bei 1V zugeführte Luft wird in diesem Fall nicht mehr abgebremst; sie wird von der Kompressionswelle 53-52 direkt von der Geschwindigkeit $u_1$ auf die Geschwindigkeit $u_2$ beschleunigt.

Die übrigen Nachteile lassen sich nicht so leicht beheben. Dabei sollte beachtet werden, dass der Gehäusesteg auf der Eintrittsseite (links in Fig. 5), der an den Bereich 21 grenzt, eine wesentliche Rolle für den Impulsaustausch spielt. Die Notwendigkeit einer vom Gehäuse aufgeprägten Druckkraft kann nur vermieden werden, wenn der gesamte Impulsaustausch direkt zwischen den Gasströmungen vollzogen wird. Diese Anforderung wird von der in Fig. 6 dargestellten Gehäusegeometrie für einen Gegenstromzyklus erfüllt. Dabei sollte noch beachtet werden, dass die Gehäusestege zwischen den Wellen 56 und 57 (bzw. 56' und 57') beliebig schmal sein dürfen. Im Grenzfall dünner Zwischenwände würden sich die Expansionswellen 56 und 57 zu einer einfachen Expansionswelle vereinigen. Der Gegenstromzyklus weist der in Fig. 5 dargestellten Gehäusegeometrie für den einfachen Zyklus gegenüber noch einen wesentlichen Vorteil auf. Weil die Grenzschichten in den Zellen bei wechselseitiger Einströmung eher den "Stokes-Charakter" aufweisen (im Gegensatz zum "Blasius-Charakter" bei einseitiger Einströmung) dürften sie wesentlich dünner sein als im Falle der einseitigen Einströmung in den Zellenrotor. Die Berechnung des Gegenstromzyklus stimmt weitgehend mit der Berechnung des einfachen Zyklus überein.

Aus den geometrischen Abstimmbedingungen der Wellenlaufzeiten ergeben sich mit den aus Fig. 6 ersichtlichen geometrischen Bestimmungsstücken die folgenden Ausdrücke für die Breiten der Ein- und Austrittsöffnungen, jeweils als Verhältnis zur Länge L der Zellen 59:

$$\frac{a}{L} = \frac{V}{u_2} - \frac{2V}{c_{2V} + u_2 + c_{1N} - u_1} \qquad (7),$$

$$\frac{b}{L} = \frac{V}{u_2} - \frac{V}{Mc_{1V} + u_1} \qquad (8),$$

$$\frac{d}{L} = \frac{V}{Mc_{1V} + u_1} \qquad (9),$$

$$\frac{A}{L} = \frac{V}{u_1} + \frac{2V}{c_{2V} + u_2 + c_{1N} - u_1} \qquad (10),$$

$$\frac{B}{L} = \frac{V}{u_1} - \frac{V}{Mc_{1V} + u_1} \qquad (11),$$

und

$$\frac{D}{L} = \frac{2V}{c_{2V} + u_2 + c_{1N} - u_1} \qquad (12).$$

Schliesslich liefert die Periodizitätsbedingung (Schliessbedingung des Zyklus)

$$a + S + D + B = \pi \cdot R \qquad (13),$$

worin S die Stegbreite und R den Rotorradius bedeuten, als welcher zweckmässig der auf die Rotorzellen 59 bezogene mittlere Radius angenommen wird. Obige Periodizitätsbedingung bringt zum Ausdruck, dass auf dem gesamten Umfang die Einlassöffnungen 1V und 2V und die Auslassöffnungen 1N und 2N je einmal vorhanden sind.

In den Gleichungen (7) - (13) bedeutet $M = \frac{u_2 - u_1}{c_{1V}}$, wobei wie früher $u_1$ und $u_2$ die relativen Strömungsgeschwindigkeiten der beiden Medien, bezogen auf die Zellen, an den Enden von Lade- und Spülzone sowie $c_{1V}$ die Schallgeschwindigkeit in 1V bedeuten. Die übrigen Geschwindigkeitsgrössen entsprechen den in den Gleichungen (1) - (6) erklärten, die Bedeutung der geometrischen Grössen geht aus Fig. 6 hervor.

Die Fig. 7 zeigt eine praxisgerechte Gestaltung der in Fig. 6 schematisch dargestellten Kanäle und Zellenwände. Diese Gestaltung mit den abgerundeten Ein- und Austrittspartien der Kanäle und der Zellenwände gewährleistet, dass an diesen Partien schädliche Ablösungen der Strömung vermieden werden. Die breiten Grenzlinien 61, die quer zu den Zellenwänden verlaufen, stellen Kompressionswellen, die dünnen Grenzlinien 62 Expansionswellen dar. Die unterschiedlich dunklen Tönungen kennzeichnen unterschiedliche Dichtezustände des Treibgases und der Luft in den Bereichen 2V und 1N bzw. 1V und 2N. Wie in der Einleitung erwähnt, bezeichnet 2V den Bereich mit Hochdrucktreibgas, 1N den Bereich mit entspanntem Treibgas, 1V den Bereich mit Luft von Anfangsdruck und 2N den Bereich mit auf den Enddruck verdichteter Luft.

Frühere, in einem BBC-Versuchsbericht TFVL 1677 veröffentlichte Messungen an einem für eine Gasturbinenlokomotive vorgesehenen einfachen Drucktauscher ergaben einen Nutzluftanteil, der etwa 25 - 30 % der theoretisch möglichen Nutzluftmenge erreichte.

Auf wirklichkeitsnahen Annahmen beruhende Berechnungen zeigen dagegen, dass bei einem Gegenstromdrucktauscher mit der Gehäusegeometrie nach Fig. 6 bei Berücksichtigung aller Verluste die bei 2N vom Rotor abgegebene effektive Luftmenge im schlechtesten Falle 60-70 % der theoretisch möglichen Menge beträgt. Vorteilhaft gegenüber der erwähnten früheren Konzeption ist ferner, dass der Gegenstromdrucktauscher keinerlei Hilfsaggregate in Form von Spülhilfen zur Überwindung eines Druckanstiegs benötigt, weil die überschüssige kinetische Energie der Luftmasse bei 2N zur Kompensation sämtlicher Reibungsverluste und Strömungswiderstände mehr als ausreichend ist. Bei sonst gleichen thermodynamischen Bedingungen wie beim obenerwähnten einfachen Drucktauscher erhält man für eine Gasturbinenanlage mit dem Gegenstromdrucktauscher einen Gesamtwirkungsgrad von ca. 0,41. Mit dem früher vorgeschlagenen Drucktauscher war es hingegen nicht möglich, die Wirkungsgrade konventioneller

Gasturbinen deutlich zu übertreffen, wobei als Hauptursache dafür sicherlich die Gehäusegeometrie mit der Beziehung A - D < B anzusehen ist.

Die Berechnung des Gegenstromdrucktauscherzyklus zeigt, dass der erwähnte Nutzluftanteil N für die Verlustanteile des Drucktauscherprozesses entscheidend ist. Mit steigendem N nimmt auch der Gesamtwirkungsgrad der Gasturbinenanlage zu. Bei hohen N-Werten ist es gegebenenfalls auch möglich, die Leistung allein durch die der Turbinenbrennkammer zuzuführende Brennstoffmenge zu regeln, ohne die Betriebsbedingungen der Drucktauscherbrennkammer und des Drucktauschers selbst zu ändern.

Dies ermöglicht eine optimale, kompromisslose und relativ einfache Auslegung der Hochdruckstufe und sehr hohe Wirkungsgrade auch im Teillastbetrieb der Anlage.

Wie eingangs gesagt, ist es zweckmässig, den Rotor des Drucktauschers über die Gasdruckverteilung anzutreiben und auf einen mechanischen Antrieb von aussen zu verzichten.

Entsprechende Erfahrungen mit Druckwandlern zeigen, dass der freie Lauf des Rotors unproblematisch ist. Damit wird nicht nur die Konstruktion des Drucktauschers vereinfacht, sondern die Dichtungsprobleme sind ebenfalls einfacher zu lösen.

Die Teile, die thermisch am stärksten beansprucht werden, sind die Drucktauscherbrennkammer und der Eintrittskanal 2V zum Rotor. Es ist aber möglich, den Luftanteil, der den stöchiometrischen Anteil übersteigt, problemlos für eine gut funktionierende Filmkühlung der Brennkammer- und Rohrwände auszunützen Ausserdem ist es durchaus denkbar und vielleicht sogar wünschbar, einen Teil des Reaktionsablaufs in die Rotorzellen zu verlegen. Die Drucktauscherbrennkammer 4 bzw. 11 könnte also sehr kompakt gebaut und direkt vor dem Eintritt 2V angeordnet werden.

Besonders bei Druckverhältnissen $p_2/p_1 > 2$ wäre der Versuch, die kinetische Energie der verdichteten Luft bei 2N mit einem Unterschalldiffusor zurückzugewinnen, kaum sinnvoll. Es wäre in bezug auf den Wirkungsgrad jedoch von Vorteil, dem Austritt 2N eine Lavaldüse mit kritischem engsten Querschnitt nachzuschalten und die Strömung mit einer Stosswelle abzubremsen. Solange eine solche Stosswelle ein Druckverhältnis von nicht mehr als etwa 2,5 - 3 aufweist, dürfte diese Art der Rückgewinnung der kinetischen Energie wirkungsgradmässig günstiger sein als die Rückgewinnung mit einem Unterschalldiffusor. Überdies wird dadurch die Konstruktion der Drucktauschergehäuse einfacher und kompakter.

Bei der Anwendung mehrstufiger Gegenstromdrucktauscher gemäss Fig. 2 in Kombianlagen oder bei Düsentriebwerken könnte man wahrscheinlich auf die Basisanlage, d.h., auf den Verdichter und die Niederdruckturbine, völlig verzichten. Im Falle einer Kombianlage hätte zwar die Gasturbinenanlage, bestehend aus einem mehrstufigen Drucktauscher und einer Turbine, einen Wirkungsgrad, der kaum wesentlich höher liegen würde als der Wirkungsgrad einer konventionellen Gasturbine. Der bei 1N abgegebene Gasstrom wäre aber äusserst hochwertig und würde sich daher vorzüglich zur Aufbereitung von Frischdampf für eine Dampfturbinen anlage eignen. Mit anderen Worten, die Abgasentropieverhältnisse wären gegebenenfalls sehr günstig. Bei einem Düsentriebwerk könnte man auch noch auf die Turbine verzichten, weil ja kein Verdichter mehr angetrieben werden müsste. Man könnte sich also ein Düsentriebwerk mit hohem Wirkungsgrad vorstellen, welches lediglich aus einem zwei- oder dreistufigen Drucktauscher, einer Brennkammer und einer Lavaldüse besteht, wobei das vom Drucktauscher 1N abgegebene Gas für eine Mantelstromisolation verwendet werden könnte.

Die in den Figuren 5 und 6 gezeigten Anordnungen der Steuerkanäle können ohne weitere Modifikationen verwendet werden, falls das Temperaturverhältnis von Abgas und Luft genügend hoch, d.h., über 3 ist und das Druckverhältnis $p_2/p_1$ über einer Drucktauscherstufe nicht zu gross, und zwar nicht über 2, gewählt wird. Falls nicht beide Einschränkungen erfüllt werden, so ist der kinetische Energieüberschuss bei 2N ungünstig hoch oder die Niederdruckzone 1V-1N ungünstig breit. Dieser Mangel lässt sich aber dadurch beheben, dass der Druck bei 1V etwas höher gewählt wird als bei 1N. Auf diese Weise kann die kinetische Energie bei 2N reduziert und die Breite der Zone 1V-1N verkleinert werden. Zwar treten in diesem Falle in der Niederdruckzone wieder Streuwellen auf, doch bleiben deren Auswirkungen vergleichsweise harmlos, weil die Geschwindigkeiten im Niederdruckbereich klein sind und weil die Mehrfachreflexion an der Mediengrenze in diesem Falle nicht zu einer kumulierten Beschleunigung oder Abbremsung der Strömung führen.

Die Fig. 8 zeigt eine Variante des in Fig. 2 im Zusammenwirken mit einer Gasturbine dargestellten Drucktauschers. Der Unterschied gegenüber diesem besteht darin, dass die Drucktauscherbrennkammer 11 in etwa der Mitte der Höhe des äussersten Zellenrotors 21 angeordnet ist. Dadurch werden zwar die beiden Steuergehäuse 26 und 32 komplizierter, da die Mündungen ihrer Kanäle bei beiden in verschiedenen Ebenen liegen, doch fallen andererseits die Kanäle zwischen den Rotoren 21 - 24 insgesamt kürzer aus, was geringere Strömungs- und Wärmeverluste zur Folge hat.

**Patentansprüche**

1. Als Drucktauscher arbeitende Druckwellenmaschine, insbesondere zur Verwendung als Hochdruckverdichter für Gasturbinen, mit einem Rotorgehäuse, mindestens einem innerhalb dieses Rotorgehäuses untergebrachten Zellenrotor, mit je einem an den beiden stirnseiten des Rotorgehäuses angeflanschten steuergehäuse, die das Rotorgehäuse an dessen beiden stirnseiten abschliessen, wobei die steuergehäuse an den stirnseiten des Rotorgehäuses mindestens je einen Hochdrucktreibgaskanal (2V) und

einen Niederdruckluftkanal (1V) bzw. einen Niederdrucktreibgaskanal (1N) und einen Hochdruckluftkanal (2N) aufweisen, die einander funktionsmässig zugeordnet sind, ferner mit einer Drucktauscherbrennkammer (4; 11), die zur Erzeugung des Hochdrucktreibgases dient und mit dem Hochdrucktreibgaskanal (2V) in Verbindung steht, welche Drucktauscherbrennkammer (4; 11) ferner mit dem Hochdruckluftkanal (2N) in Verbindung steht, aus welchem zur Verbrennung des für die Drucktauscherbrennkammer bestimmten Brennstoffes ein Teil der Hochdruckluft in die Drucktauscherbrennkammer abgezweigt wird, wogegen die restliche Hochdruckluft für eine Verbrennung in einer weiteren Brennkammer (9; 15) zur Verfügung steht, dadurch gekennzeichnet, dass die schliesskante (46) des Niederdruckluftkanals (1V), in Drehrichtung des Zellenrotors gesehen, vor der schliesskante (47) des Niederdrucktreibgaskanals (1N) liegt und dass für die Gehäusegeometrie die Bedingung A - D > B gilt, worin A den Abstand der Öffnungskante (51) des Niederdrucktreibgaskanals (1N) von der schliesskante (47) des Niederdrucktreibgaskanals (1N), d.h., die Länge des Niedeldrucktreibgaskanals (1N), D den Abstand der Öffnungskante (51) des Niederdrucktreibgaskanals (1N) von der Öffnungskante (50) des Niederdruckluftkanals (1V) und B die Länge des Niederdruckluftkanals (1V) bedeutet, wobei die Öffnungskante (51) des Niederdrucktreibgaskanals (1N), in Richtung der Umfangsgeschwindigkeit des Zellenrotors gesehen, vor der Öffnungskante (50) des Niederdruckluftkanals (1V) liegt, und die Längen A, B und D in einem durch die halbe Höhe der Zellen gelegten Zylinderschnitt gemessen sind.

2. Drucktauscher nach Anspruch 1, wobei sich in einem der beiden das Rotorgehäuse an dessen Stirnseiten abschliessenden Steuergehäusen die Einlasskanäle (2V; 1V) für das Hochdrucktreibgas bzw. die Niederdruckluft und in dem anderen Gehäuse die Auslasskanäle (2N; 1N) für die Hochdruckluft bzw. das Niederdrucktreibgas befinden, dadurch gekennzeichnet, dass zwischen der Länge (L) der Zellen des Zellenrotors, dem Abstand (d) der Öffnungskante (61) des Hochdrucktreibgaskanals (2V) von der Öffnungskante (62) des Hochdruckluftkanals (2N), der Länge (a) des Hochdrucktreibgaskanals (2V), der Länge (b) des Hochdruckluftkanals (2N), dem Abstand (A) der Öffnungskante (51) des Niederdrucktreibgaskanals (1N) von der Schliesskante (47) des Niederdrucktreibgaskanals (1N), d.h., der Länge des Niederdrucktreibgaskanals, dem Abstand (D) der Öffnungskante (51) des Niederdrucktreibgaskanals (1N) von der Öffnungskante (50) des Niederdruckluftkanals (1V), der Länge (B) des Niederdruckluftkanals (1V) sowie den für den Druckwellenprozess massgeblichen Geschwindigkeitsgrössen folgende Beziehungen bestehen, wobei die genannten Grössen d, a, b, A, D und B in einem durch die halbe Höhe der Zellen gelegten Zylinderschnitt gemessen sind:

$$-\frac{V}{u_s} = \frac{d}{L},$$

$$-\frac{V}{u_2} = \frac{b+d}{L}.$$

$$-\frac{2V}{c_{2V}+u_2+c_{21}} = \frac{b+d-a}{L},$$

$$-\frac{2V}{c_{21}+c_{1N}-u_1} = \frac{D}{L},$$

$$-\frac{V}{u_1} = \frac{A-D}{L}, \text{ und}$$

$$-\frac{2V}{c_{1V}+u_1+c_{12}} = \frac{A-B-D}{L} \text{ worin bedeuten:}$$

V die Relativgeschwindigkeit der Rotorzellen gegenüber dem Gehäuse,
$u_s$ die Ausbreitungsgeschwindigkeit der Stosswelle,
u die relative Strömungsgeschwindigkeit der Medien, bezogen auf die Zellen, an den Enden von Ladeund Spülzone, und
c die Schallgeschwindigkeit,

wobei sich die Indizes 2V, 1N auf das Hochdrucktreibgas bzw. das Niederdrucktreibgas und der Index 1V auf die Niederdruckluft beziehen, ferner die Indizes 1 und 2 auf Niederdruck bzw. Hochdruck sowie der Index 21 auf den Expansionsbereich des Treibgases und der Index 12 auf den Kompressionsbereich der Luft.

3. Drucktauscher nach Anspruch 1, für einen Gegenstromdrucktauscherzyklus, dadurch gekennzeichnet, dass sowohl der Eintrittskanal (2V) für das Hochdrucktreibgas und der Austrittskanal (2N) für die Hochdruckluft als auch der Eintrittskanal (1V) für die Niederdruckluft und der Austrittskanal (1N) für das Niederdrucktreibgas jeweils abwechselnd einander gegenüber in den genannten Steuergehäusen auf entgegengesetzten Seiten des Zellenrotors angeordnet sind, derart, dass, in der Richtung der Umfangsgeschwindigkeit des Zellenrotors gesehen, im einen Steuergehäuse die Kanäle 1V, 2V, 1N und 2N und im anderen Steuergehäuse die Kanäle 1N, 2N, 1V und 2V aufeinanderfolgen, wobei der Kanal 1N des letztgenannten Steuergehäuses dem Kanal 1V des erstgenannten Steuergehäuses gegenüberliegt, und dass zwischen den Bestimmungsstücken der Gehäusegeometrie und den für den Druckwellenprozess massgeblichen Geschwindigkeitsgrössen die folgenden Ausdrücke, jeweils bezogen auf die Länge (L) der fellen, gelten:

$$\frac{a}{L} = \frac{V}{u_2} - \frac{2V}{c_{2V}+u_2+c_{1N}-u_1},$$

$$\frac{b}{L} = \frac{V}{u_2} - \frac{V}{Mc_{1V}+u_1},$$

$$\frac{d}{L} = \frac{V}{Mc_{1V} + u_1},$$

$$\frac{A}{L} = \frac{V}{u_1} + \frac{2V}{c_{2V} + u_2 + c_{1N} - u_1},$$

$$\frac{B}{L} = \frac{V}{u_1} - \frac{V}{Mc_{1V} + u_1},$$

$$\frac{D}{L} = \frac{2V}{c_{2V} + u_2 + c_{1N} - u_1} \text{ und}$$

$$a + S + D + B = \pi \cdot R,$$

wobei im letzten Ausdruck S die Stegbreite zwischen den Kanälen 2V und 1N und R den auf die Rotorzellen (59) bezogenen mittleren Radius bedeutet, wobei ferner die Definitionen der geometrischen Bestimmungsstücke und der Geschwindigkeitsgrössen mit jenen des Anspruchs 2 übereinstimmen und $M = \frac{u_2 - u_1}{c_{1V}}$, wobei $u_1$ und $u_2$ die relativen Strömungsgeschwindigkeiten der beiden Medien, bezogen auf die Zellen, an den Enden von Lade- und Spülzone sowie $c_{1V}$ die Schallgeschwindigkeit in 1V bedeuten.

4. Drucktauscher nach Anspruch 1, ausgelegt als Treibgaserzeuger für eine Gasturbine mit einem Hochdruckteil und einem Niederdruckteil, gekennzeichnet durch eine Mehrzahl koaxialer Zellenrotoren (21 - 24) mit senkrechter Drehachse (10), die mit geringem gegenseitigen radialen Spiel in einem gemeinsamen Rotorgehäuse (40a) gleichsinnig drehbar gelagert sind, dessen Stirnseiten durch ein oberes Steuergehäuse (26) und ein unteres Steuergehäuse (32) abgeschlossen sind, ferner dadurch gekennzeichnet, dass innerhalb des innersten Zellenrotors (24) eine zu den Zellenrotoren koaxiale Drucktauscherbrennkammer (11) mit einem Drucktauscherbrenner (14) angeordnet ist, dass das obere Steuergehäuse (26) und das untere Steuergehäuse (32) Überströmkanäle (27 - 30; 33 - 35) aufweisen, wobei Überströmkanäle (27, 35, 29, 33) im oberen Steuergehäuse (26) von der Drucktauscherbrennkammer (11) ausgehend die oberen Stirnseiten der von den Zellenrotoren (21 - 24) eingenommenen ringzylindrischen Räume miteinander verbinden, derart dass das in der Drucktauscherbrennkammer (11) erzeugte Treibgas aus einem Zellenrotor in den jeweils nächstäusseren Zellenrotor umgelenkt und vom äussersten Zellenrotor (21), in einen Treibgasaustrittsstutzen (31) geleitet wird, der dazu bestimmt ist, mit dem Niederdruckteil (37) einer Gasturbine (19) verbunden zu werden, dass Überströmkanäle (30, 34, 28) im unteren Steuergehäuse (32) von einem Luftansaugkanal (25) im Bereich des äussersten Zellenrotors (21) ausgehend die Stirnseiten der von den Zellenrotoren (21 - 24) eingenommenen ringzylindrischen Räume miteinander verbinden, derart, dass die durch den Luftansaugkanal (25) angesaugte Luft aus einem Zellenrotor in den jeweils nächstinneren Zellerotor und schliesslich die auf den Enddruck verdichtete Luft bis vor die Eintrittsseite der Druckauscherbrennkammer (11) geleitet wird, wo sich die Luftführung in eine Drucktauscherluftkammer (13) für die zur Primärverbrennung in der Drucktauscherluftkammer (11) bestimmte Luft und in eine Tubinenluftleitung (16) für die zur Sekundärberbrennung in einer Turbinenbrennkammer (18) für den Hochdruckteil (36) der Gasturbine (19) bestimmte Lift verzweigt.

## Claims

1. Pressure wave machine operating as a pressure exchanger, in particular for use as the high pressure compressor for gas turbines, having a rotor casing, at least one cell rotor located within this rotor casing, having a control casing flanged onto each of the two end faces of the rotor casing, which control casings close off the rotor casing at its two end surfaces, each control casing at the end surfaces of the rotor casing having at least one high pressure driving gas port (2V) and one low pressure air port (1V) and one low pressure driving gas port (1N) and one high pressure air port (2N), respectively, which are assigned to each other from a functional point of view, also having a pressure exchanger combustion chamber (4; 11), which is used to generate the high pressure driving gas and which is connected to the high pressure driving gas port (2V), which pressure exchanger combustion chamber (4; 11) is also connected to the high pressure air port (2N), from which is branched off a part of the high pressure air in the pressure exchanger combustion chamber for burning the fuel intended for the pressure exchanger combustion chamber, the rest of the high pressure air, on the other hand, being available for combustion in a further combustion chamber (9; 15), characterised in that the closing edge (46) of the low pressure air port (1N), seen in the direction of rotation of the cell rotor, is located before the closing edge (47) of the low pressure driving gas port (1N) and that the condition A - D > B applies to the casing geometry, where A is the distance between the opening edge (51) of the low pressure driving gas port (1N) and the closing edge (47) of the low pressure driving gas port (1N), i.e. the length of the low pressure driving gas port (1N), D is the distance between the opening edge (51) of the low pressure driving gas port (1N) and the opening edge (50) of the low pressure air port (1V) and B is the length of the low pressure air port (1V), the opening edge (51) of the low pressure driving gas port (1N), seen in the direction of the peripheral velocity of the cell rotor, being located before the opening edge (50) of the low pressure air port (1V), and the lengths A, B and D are measured in a cylindrical section located at half the height of the cells.

2. Pressure exchanger according to Claim 1, in which the inlet ports (2V; 1V) for the high pressure driving gas

and the low pressure air are located in one of the two control casings closing the rotor casing on its end surfaces and the outlet ports (2N; 1N) for the high pressure air and the low pressure driving gas are located in the other casing, characterised in that the following relationships exist between the length (L) of the cells of the cell rot-or, the distance (d) between the opening edge (61) of the high pressure driving gas port (20) and the opening edge (62) of the high pressure air port (2N), the length (a) of the high pressure driving gas port (2V), the length (b) of the high pressure air port (2N), the distance (A) between the opening edge (51) of the low pressure driving gas port (1N) and the closing edge (47) of the low pressure driving gas port (1N), i.e. the length of the low pressure driving gas port, the distance (D) between the opening edge (51) of the low pressure driving gas port (1V) and the opening edge (50) of the low pressure air port (1V), the length (8) of the low pressure air port (1V) and the velocity parameters determining the pressure wave process, the quoted quantities d, a, b, A, D and B being measured in a cylindrical section located at half the height of the cells;

- $\frac{V}{u_s} = \frac{d}{L}$,

- $\frac{V}{u_2} = \frac{b+d}{L}$.

- $\frac{2V}{c_{2V}+u_2+c_{21}} = \frac{b+d-a}{L}$,

- $\frac{2V}{c_{21}+c_{1N}-u_1} = \frac{D}{L}$,

- $\frac{V}{u_1} = \frac{A-D}{L}$, and

- $\frac{2V}{c_{1U}+u_1+c_{12}} = \frac{A-B-D}{L}$

where

V is the velocity of the rotor cells relative to the casing,

$u_s$ is the propagation velocity of the shock wave,

u is the flow velocity of the media, relative to the cells, at the ends of the charging zone and the scavenging zone, and

c is the sonic velocity,

where the indices 2V and 1N refer to the high pressure driving gas and the low pressure driving gas, respectively, and the index 1V refers to the low pressure air; furthermore, the indices 1 and 2 refer to low pressure and high pressure, respectively, the index 21 to the expansion range of the driving gas and the index 12 to the compression range of the air.

3. Pressure exchanger according to Claim 1 for a counterflow pressure exchanger cycle, characterised in that both the entry port (2V) for the high pressure driving gas and the outlet port (2N) for the high pressure air and also the entry duct (10) for the low pressure air and the outlet duct (1N) for the low pressure driving gas are, in each case, alternately located opposite to one another, in the control casings mentioned, on opposite sides of the cell rotor, in such a way that, seen in the direction of the peripheral velocity of the cell rotor, the ports 1V, 2V, 1N and 2N follow in series in one control casing and the ports 1N, 2N, 1V and 2V follow in series in the other control casing, the port 1N of the control casing mentioned last being located opposite to the port 1V of the control casing first mentioned and that between the casing parts which determine the geometry and the velocity parameters determining the pressure wave process, the following expressions, referred in each case to the length (L) of the cells, apply:

$\frac{a}{L} = \frac{V}{u_2} - \frac{2V}{c_{2V}+u_2+c_{1N}-u_1}$,

$\frac{b}{L} = \frac{V}{u_2} - \frac{V}{Mc_{1V}+u_1}$,

$\frac{d}{L} = \frac{V}{Mc_{1V}+u_1}$,

$\frac{A}{L} = \frac{V}{u_1} + \frac{2V}{c_{2V}+u_2+c_{1N}-u_1}$,

$\frac{B}{L} = \frac{V}{u_1} - \frac{V}{Mc_{1V}+u_1}$,

$\frac{D}{L} = \frac{2V}{c_{2V}+u_2+c_{1N}-u_1}$ and

$a + S + D + B = \pi \cdot R$,

where, in the last expression, S is the land width between the ports 2V and 1N and R is the average radius referred to the rotor cells (59) and where, furthermore, the definitions of the parts determining the geometry and the velocity parameters agree with those of claim 2 and $M = (u_s-u_1)/c_{1V}$, where $u_1$ and $u_2$ are the flow velocities of the two media relative to the cells at the ends of the charging zone and the scavenging zone and $c_{1V}$ is the sonic velocity in 1V.

4. Pressure exchanger according to claim 1, designed as the driving gas generator for a gas turbine with a high pressure part and a low pressure part, characterised by a multiplicity of coaxial cell rotors (21 - 24) with a vertical rotational axis (10), which - with small mutual radial play - are supported so as to be rotatable in the same direction in a common rotor casing (40a), the end surfaces of which are closed by an upper control casing (26) and a lower control casing (32), also characterised in that within the innermost cell rotor (24), a pressure exchanger combustion chamber (11) with a pressure exchanger burner (14) is located coaxially with the cell rotors, that the upper control casing (26) and the lower control casing (32) have transfer ducts (27 - 30; 33 - 35), the transfer ducts (27, 35, 29, 33) in the upper control casing (26) connecting the upper end surfaces of the annular cylindrical spaces enclosed by the cell rotors (21 - 24), starting from the pressure exchanger combustion chamber (11), in such a way that the driving gas generated in the pressure exchanger combustion chamber (11) is deflected from one cell rotor into the next outer cell rotor in each case and is led from the outermost cell rotor (21) into a driving gas outlet stub pipe (31), which is intended to be connected to the low pressure part (37) of a gas turbine (19), that transfer ports (30, 34, 28) in the lower control casing (32) mutually connect the ends of the annular cylindrical spaces enclosed by the cell rotors (21 - 24), starting from an air induction duct (25) in the region of the outermost cell rotor (11), in such a way that the air induced through the air induction duct (25) is led from one cell rotor into the next inner cell rotor in each case and finally the air compressed to the final pressure is led to a point upstream of the entry side of the pressure exchanger combustion chamber (11) where the air guidance arrangement branches off the air intended for primary combustion in the pressure exchanger air chamber (11) into a pressure exchanger air chamber (13) and the air intended for secondary combustion in a turbine combustion chamber (18) for the high pressure part (36) of the gas turbine (19) into a turbine air duct (16).

**Revendications**

1. Machine à ondes de pression travaillant comme échangeur de pression, spécialement pour utilisation comme compresseur à haute pression pour turbines à gaz, avec un corps de rotor, au moins un rotor à cellules disposé à l'intérieur de ce corps de rotor avec des corps de commande dont chacun est fixé par des brides à l'une des deux faces d'extrémité du corps de rotor, et qui ferment le corps de rotor à ses deux faces d'extrémité, où les corps de commande présentent chacun, aux deux faces d'extrémité du corps de rotor au moins un canal des gaz de propulsion à haute pression (2V) et un canal d'air à basse pression (1V), respectivement un canal des gaz de propulsion à basse pression (1N) et un canal d'air à haute pression (2N), qui sont agencés de manière fonctionnelle l'un par rapport à l'autre, avec en outre une chambre de combustion (4; 11) de l'échangeur de pression qui sert à la production des gaz de propulsion à haute pression et qui est en communication avec le canal des gaz de propulsion à haute pression (2V), laquelle chambre de combustion (4; 11) de l'échangeur de pression se trouve également en communication avec le canal d'air à haute pression (2N) à partir duquel une fraction de l'air à haute pression est dérivée dans la chambre de combustion de l'échangeur de pression pour la combustion du carburant destiné à la chambre de combustion de l'échangeur de pression, tandis que le reste de l'air à haute pression est disponible pour une combustion dans une autre chambre de combustion (9; 15), caractérisée en ce que l'arête de fermeture (46) du canal d'air à basse pression (1V), vu dans le sens de rotation du rotor à cellules, est située avant l'arête de fermeture (47) du canal des gaz de propulsion à basse pression (1N) et en ce que, pour la géométrie du corps, on a la condition A - D > B, dans laquelle A signifie la distance entre l'arête d'ouverture (51) du canal des gaz de propulsion à basse pression (1N) et l'arête de fermeture (47) du canal des gaz de propulsion à basse pression (1N), D la distance entre l'arête d'ouverture (51) du canal des gaz de propulsion à basse pression (1N) et l'arête d'ouverture (50) du canal d'air à basse pression (1V) et B la longueur du canal d'air à basse pression (1V), l'arête d'ouverture (51) du canal des gaz de propulsion à basse pression (1N), vu dans le sens de la vitesse périphérique du rotor à cellules, étant située avant l'arête d'ouverture (50) du canal d'air à basse pression (1V), et les longueurs A, B et D étant mesurées dans une coupe cylindrique effectuée à mi-hauteur des cellules.

2. Echangeur de pression suivant la revendication 1, dans lequel les canaux d'entrée (2V; 1V) des gaz de propulsion à haute pression respectivement de l'air à basse pression se trouvent dans un des corps de commande fermant le corps de rotor aux faces d'extrémité de celui-ci tandis que les canaux de sortie (2N; 1N) de l'air à haute pression respectivement des gaz de propulsion à basse pression se trouvent dans l'autre corps, caractérisé en ce qu'entre la longueur (L) des cellules du rotor à cellules, la distance (d) entre l'arête d'ouverture (61) du canal des gaz de propulsion à haute pression (2V) et l'arête d'ouverture (62) du canal d'air à haute pression (2N), la longueur (a) du canal des gaz de propulsion à haute pression (2V), la longueur (b) du canal d'air à haute pression (2N), la distance (A) entre l'arête d'ouverture (51) du canal des gaz de propulsion à basse pression (1N) et l'arête de fermeture (47) du canal des gaz de propulsion à basse pression (1N), c'est-à-dire la longueur du canal des gaz de propulsion à basse pression, la distance (D) entre l'arête d'ouverture (51) du canal des gaz de propulsion à basse pression et l'arête d'ouverture (50) du canal d'air à basse pression (1V), la longueur (B) du canal d'air à basse pression (1V) ainsi que les grandeurs de vitesse déterminantes pour le processus des ondes de pression, il existe les relations suivantes, dans lesquelles les grandeurs mentionnées d, a, b, A, D et B sont mesurées dans une coupe cylindrique effectuée à mi-hauteur des cellules:

- $\frac{V}{u_s} = \frac{d}{L}$,

- $\frac{V}{u_2} = \frac{b+d}{L}$,

- $\frac{2V}{c_{2V}+u_2+c_{21}} = \frac{b+d-a}{L}$,

- $\frac{2V}{c_{21}+c_{1N}-u_1} = \frac{D}{L}$,

- $\frac{V}{u_1} = \frac{A-D}{L}$, et

- $\frac{2V}{c_{1V}+u_1+c_{12}} = \frac{A-B-D}{L}$

où les symboles ont la signification suivante:

V la vitesse relative des cellules de rotor par rapport au corps;

$u_s$ la vitesse de propagation de l'onde de choc;

u la vitesse d'écoulement relative des fluides, rapportée aux cellules, aux extremités des zones de suralimentation et de balayage; et

c la vitesse du son,

où les indices 2V, 1N se rapportent aux gaz de propulsion à haute pression respectivement aux gaz de propulsion à basse pression et l'indice 1V, à l'air à basse pression, où en outre les indices 1 et 2 se rapportent à la basse pression respectivement à la haute pression ainsi que l'indice 21 au domaine de dilatation des gaz de propulsion et l'indice 12 au domaine de compression de l'air.

3. Echangeur de pression suivant la revendication 1, pour un cycle d'échangeur de pression à contre-courants, caractérisé en ce qu'aussi bien le canal d'entrée (2V) des gaz de propulsion à haute pression et le canal de sortie (2N) de l'air à haute pression que le canal d'entrée (1V) de l'air à basse pression et le canal de sortie (1N) des gaz de propulsion à basse pression sont disposés chaque fois en alternance l'un par rapport à l'autre sur les côtés opposés du rotor à cellules dans les corps de commande précités, de telle façon que, vu dans le sens de la vitesse périphérique du rotor à cellules, les canaux 1V, 2V, 1N et 2N se succèdent dans un corps de commande et les canaux 1N, 2N, 1V et 2V se succèdent dans l'autre corps de commande, le canal 1N de ce dernier corps de commande se trouvant en face du canal 1V du premier corps de commande, et en ce qu'entre les pièces déterminantes de la géométrie du corps et les grandeurs de vitesse déterminantes pour le processus des ondes de pression, existent les relations suivantes, chaque fois rapportées à la longueur (L) des cellules:

$\frac{a}{L} = \frac{V}{u_2} - \frac{2V}{c_{2V}+u_2+c_{1N}-u_1}$,

$\frac{b}{L} = \frac{V}{u_2} - \frac{V}{Mc_{1V}+u_1}$,

$\frac{d}{L} = \frac{V}{Mc_{1V}+u_1}$,

$\frac{A}{L} = \frac{V}{u_1} + \frac{2V}{c_{2V}+u_2+c_{1N}-u_1}$,

$\frac{B}{L} = \frac{V}{u_1} - \frac{V}{Mc_{1V}-u_1}$,

$\frac{D}{L} = \frac{2V}{c_{2V}+u_2+c_{1N}-u_1}$ et

$a + S + D + B = \pi \cdot R$,

où, dans la dernière expression, S désigne la largeur d'âme entre les canaux 2V et 1N et R le rayon rapporté aux cellules (59) du rotor, ou en outre les définitions des pièces géométriques déterminantes et des grandeurs due vitesse correspondent à celles de la revendication 2 et $M = \frac{u_2-u_1}{c_{1V}}$, où $u_1$ et $u_2$ désignent les vitesses d'écoulement relatives des deux fluides, rapportées aux cellules, aux extrémités des zones de suralimentation et de balayage, ainsi que $c_{1V}$ la vitesse du son dans 1V.

4. Echangeur de pression suivant la revendication 1, constitué en générateur de gaz de propulsion pour une turbine à gaz avec une partie haute pression et une partie basse pression, caractérisé par une pluralité de rotors à cellules (21 - 24) coaxiaux avec un axe de rotation (10) vertical, qui sont supportés en rotation dans le même sens dans un corps de rotor (40a) commun avec un faible jeu radial mutuel, corps dont les faces d'extrémité sont fermées par un corps de commande supérieur (26) et un corps de commande inférieur (32), caractérisé en outre en ce qu'à l'intérieur du rotor à cellules le plus intérieur (24) est disposée une chambre de combustion (11) de l'échangeur de pression avec un brûleur (11) de l'echangeur de pression, coaxiale aux rotors à cellules, en ce que le corps de commande supérieur (26) et le corps de commande inférieur (32) présentent des canaux de transfert (27 - 30; 33 - 35), où les canaux de transfert (27, 35, 29, 33) dans le corps de commande supérieur (26), partant de la chambre de combustion (11) de l'échangeur de pression, relient l'une a l'autre les faces d'extrémité supérieures des volumes cylindriques annulaires entourés par les rotors à cellules (21 - 24), de telle façon que les gaz de propulsion produits dans la chambre de combustion (11) de l'échangeur

de pression soient déviés d'un rotor à cellules dans le rotor à cellules extérieurement voisin et du rotor à cellules le plus extérieur (21) dans un conduit (31) de sortie des gaz de propulsion qui est destiné à être raccordé à la partie basse pression (37) d'une turbine à gaz (19), en ce que des canaux de transfert (30, 34, 28) dans le corps de commande inférieur (32), partant d'un canal d'aspiration d'air (25) dans la région du rotor à cellules le plus extérieur (21), relient l'une à l'autre les faces d'extrémité des volumes cylindriques annulaires entourés par les rotors à cellules (21 - 24), de telle façon que l'air aspiré par le canal d'aspiration d'air (25) soit conduit d'un rotor à cellules dans le rotor à cellules intérieurement voisin et que finalement l'air comprimé à la pression finale soit conduit jusqu'avant l'entrée de la chambre de combustion (11) de l'échangeur de pression, où le trajet de l'air se divise en une chambre à air (13) de l'échangeur de pression pour l'air destiné à la combustion primaire dans la chambre de combustion (11) de l'échangeur de pression et une conduite d'air de turbine (16) pour l'air destiné à la combustion secondaire dans une chambre de combustion (18) de la turbine pour la partie haute pression (36) de la turbine à gaz (19).

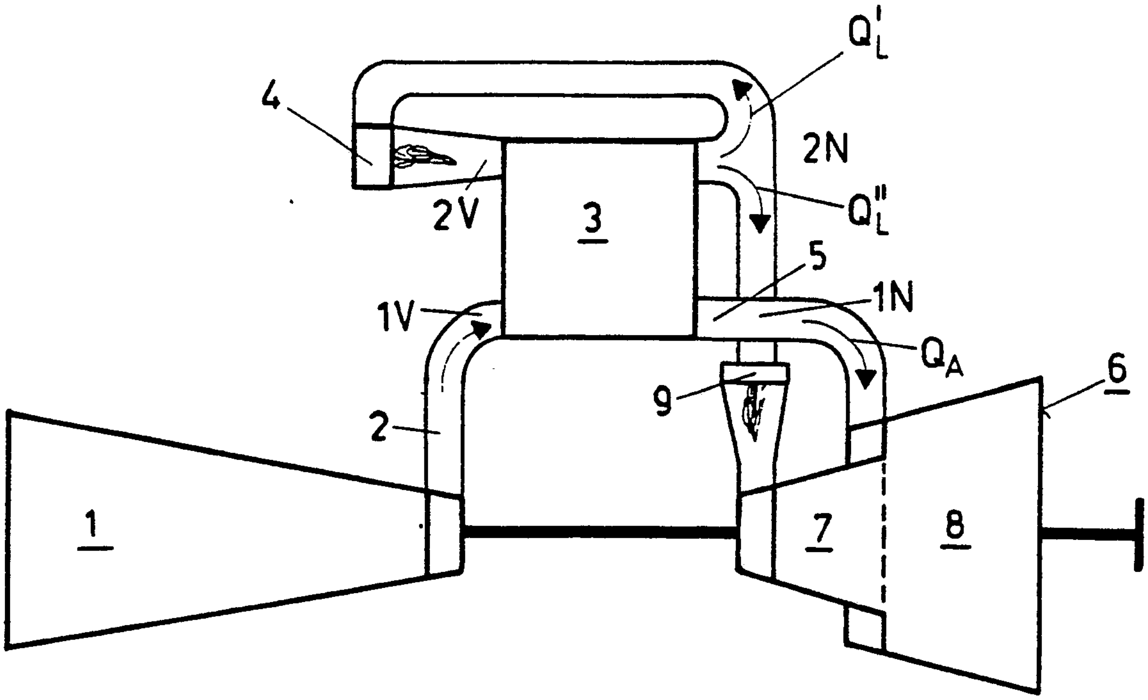


FIG.1

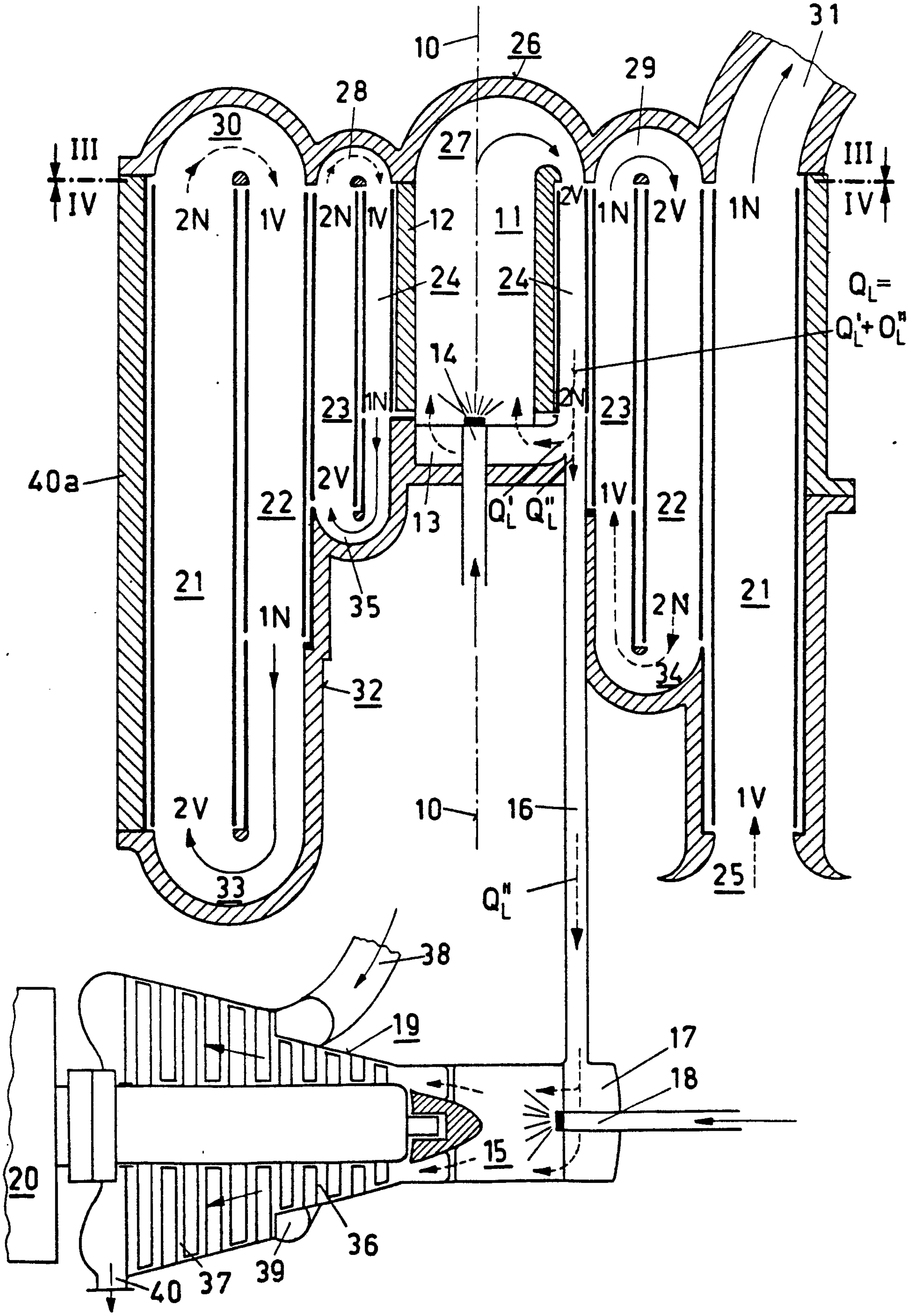
10
26
28
29
31
30
27
III
IV
2N
1V
2N
1V
12
11
2V
1N
2V
1N
III
IV
24
24
$Q_L=$
$Q_L'+Q_L''$
14
23
1N
2N
23
40a
2V
13
$Q_L'$
$Q_L''$
1V
22
22
21
35
21
1N
2N
34
32
2V
10
16
1V
33
25
$Q_L''$
38
19
17
18
15
20
36
37
39
40

FIG. 3

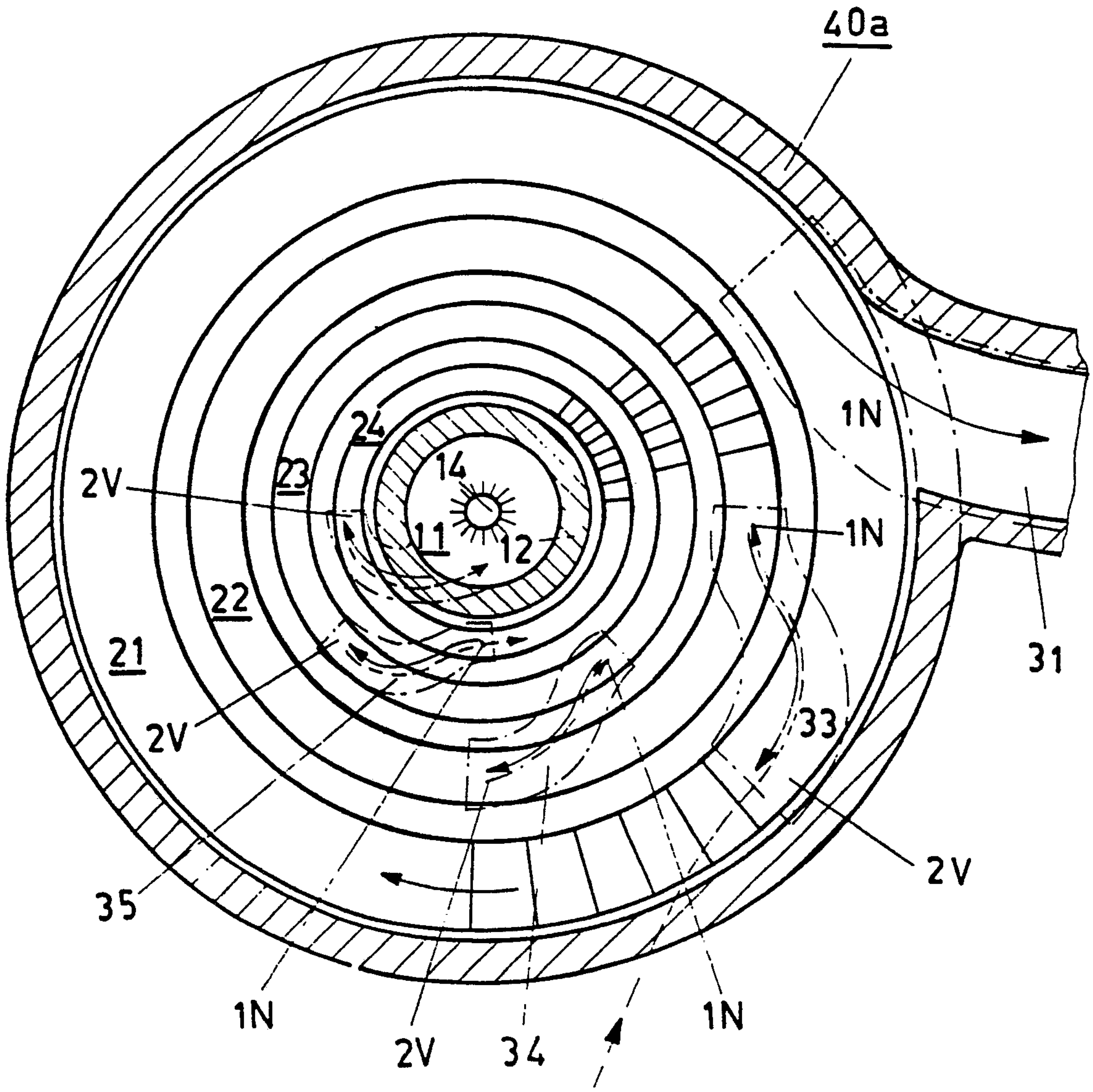

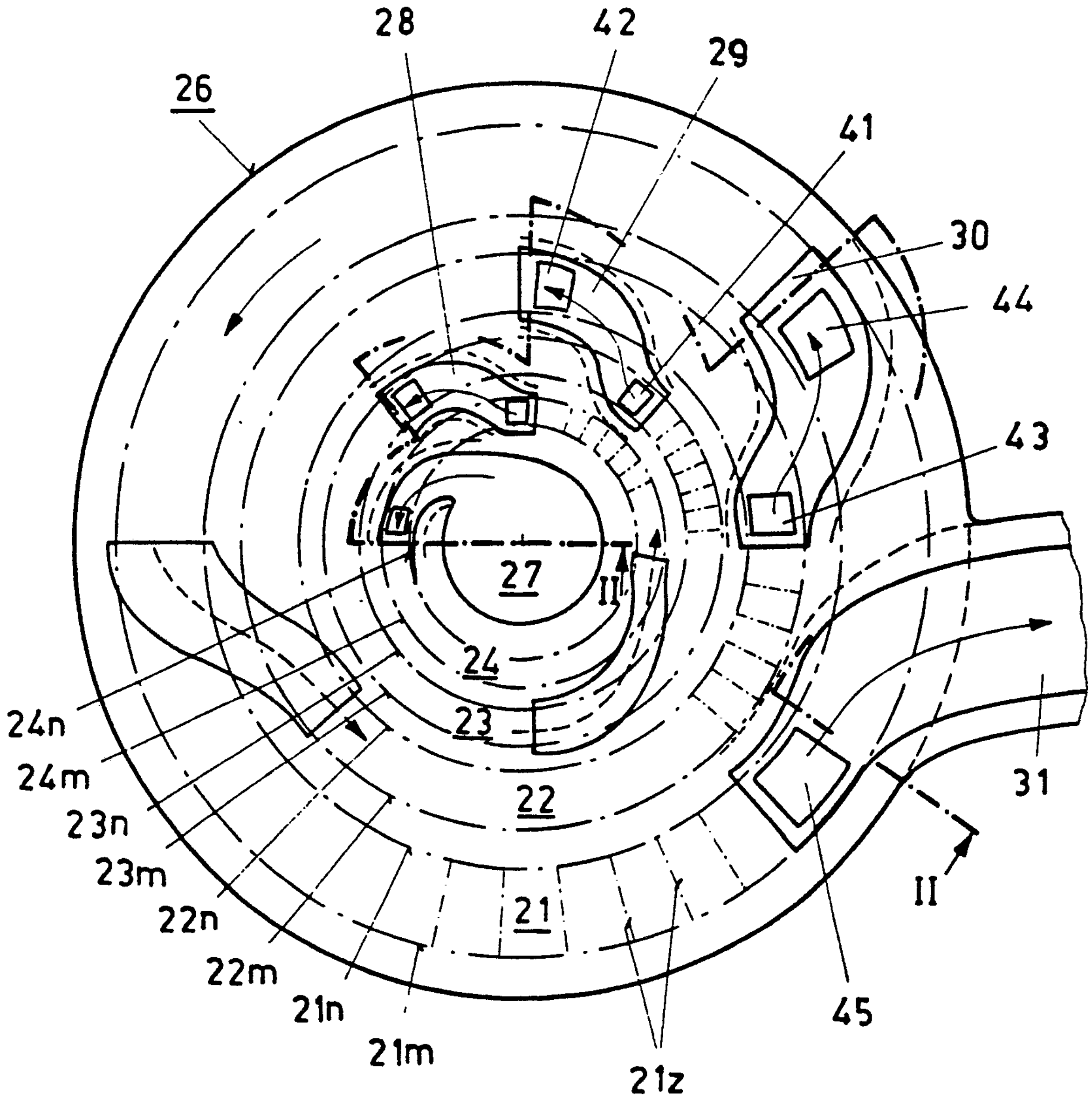
26
28
42
29
41
30
44
43
27
II
24
23
22
21
24n
24m
23n
23m
22n
22m
21n
21m
21z
45
31
II

FIG.4

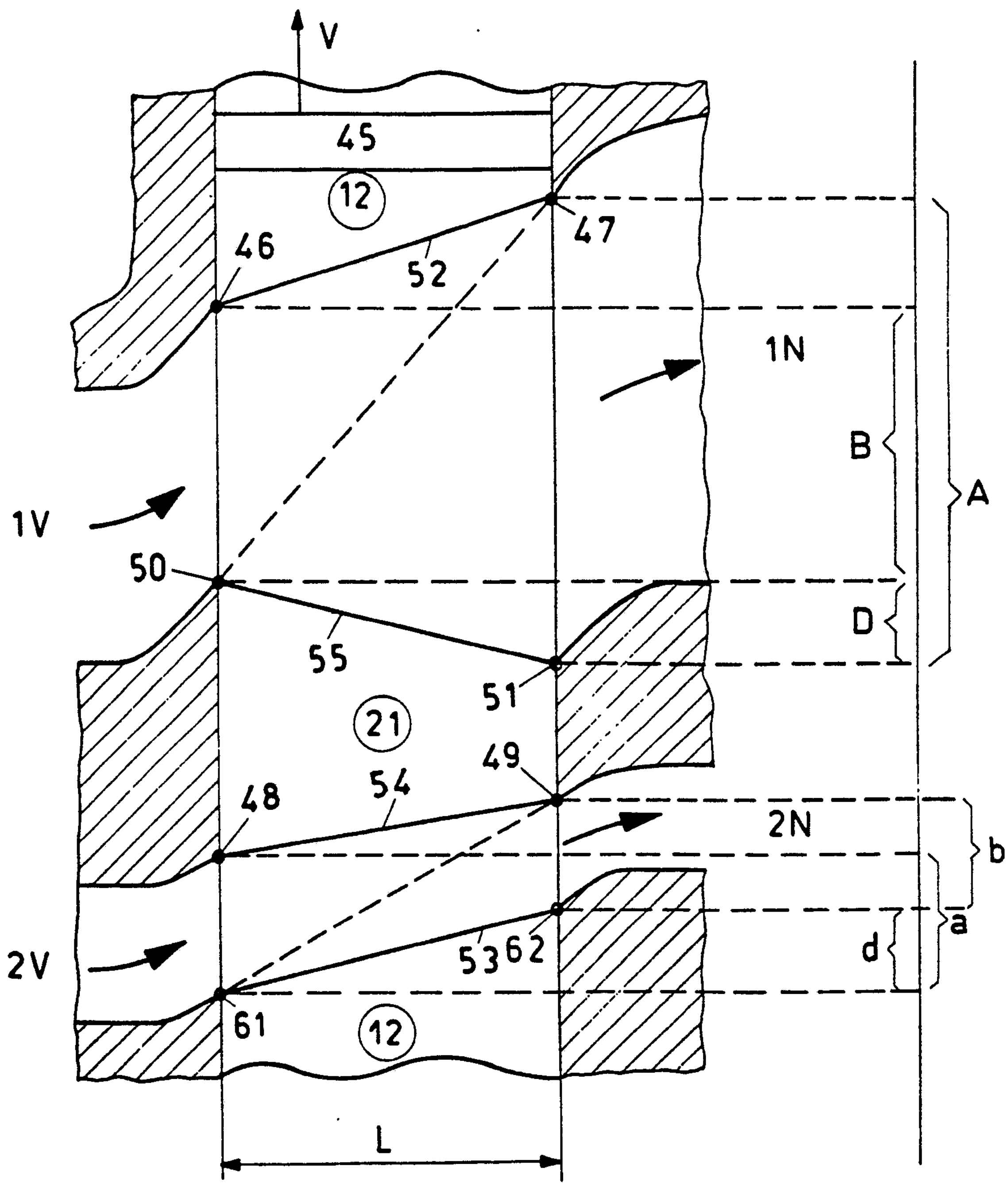


FIG.5

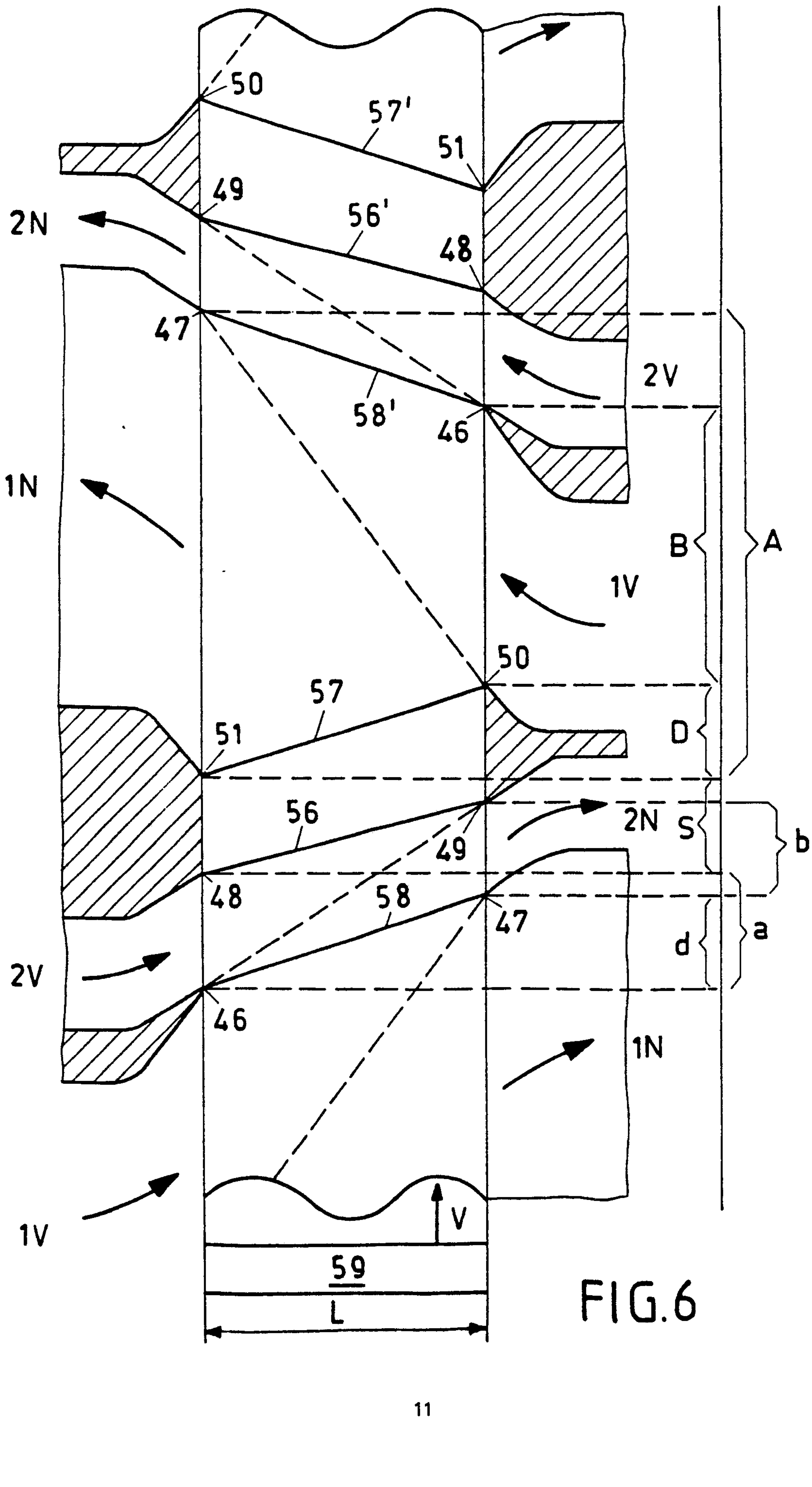
50
57'
51
49
2N
56'
48
47
2V
58'
46
1N
B
A
1V
50
57
51
D
56
2N
S
b
49
48
58
47
a
d
2V
46
1N
1V
V
59
L

FIG.6

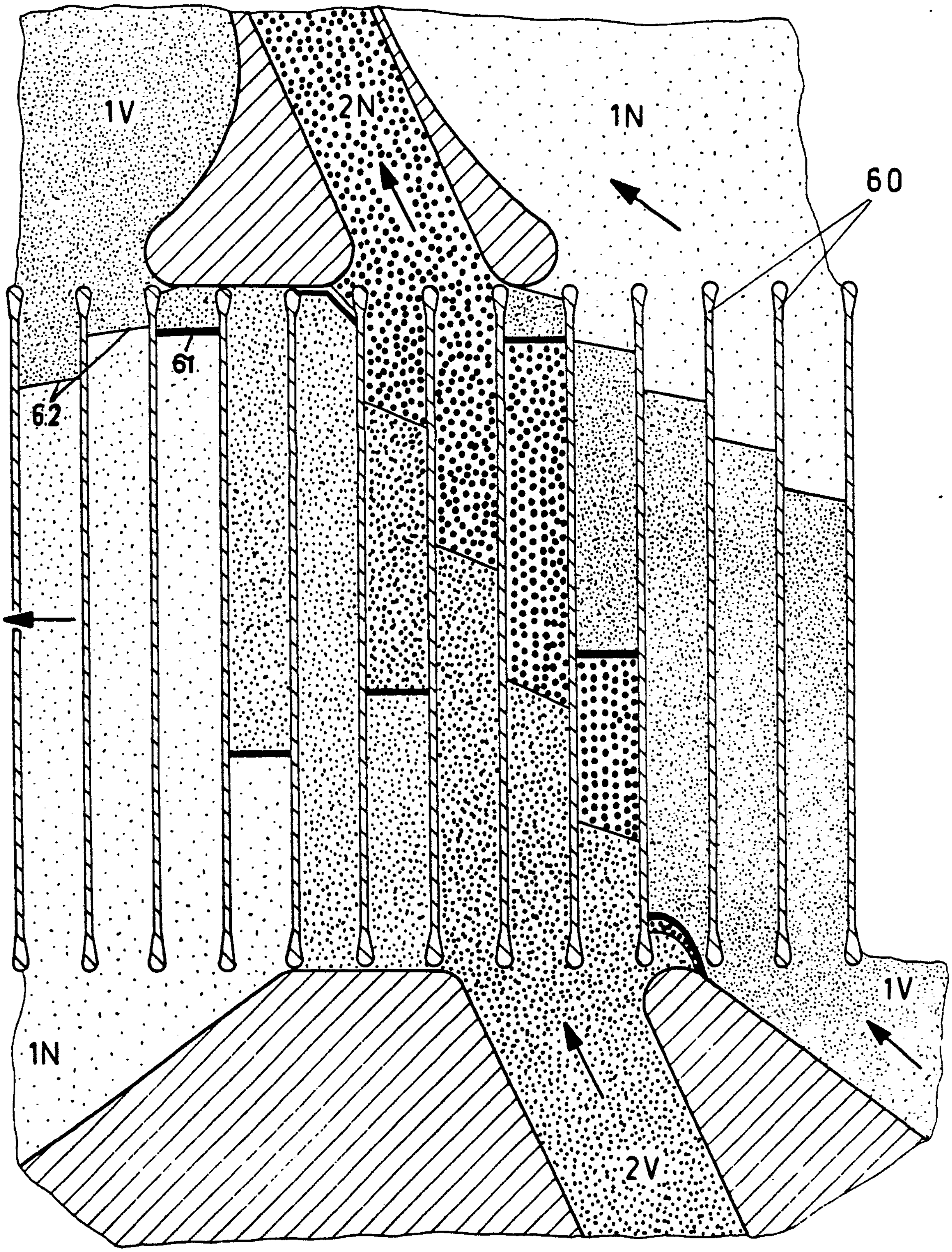


FIG.7

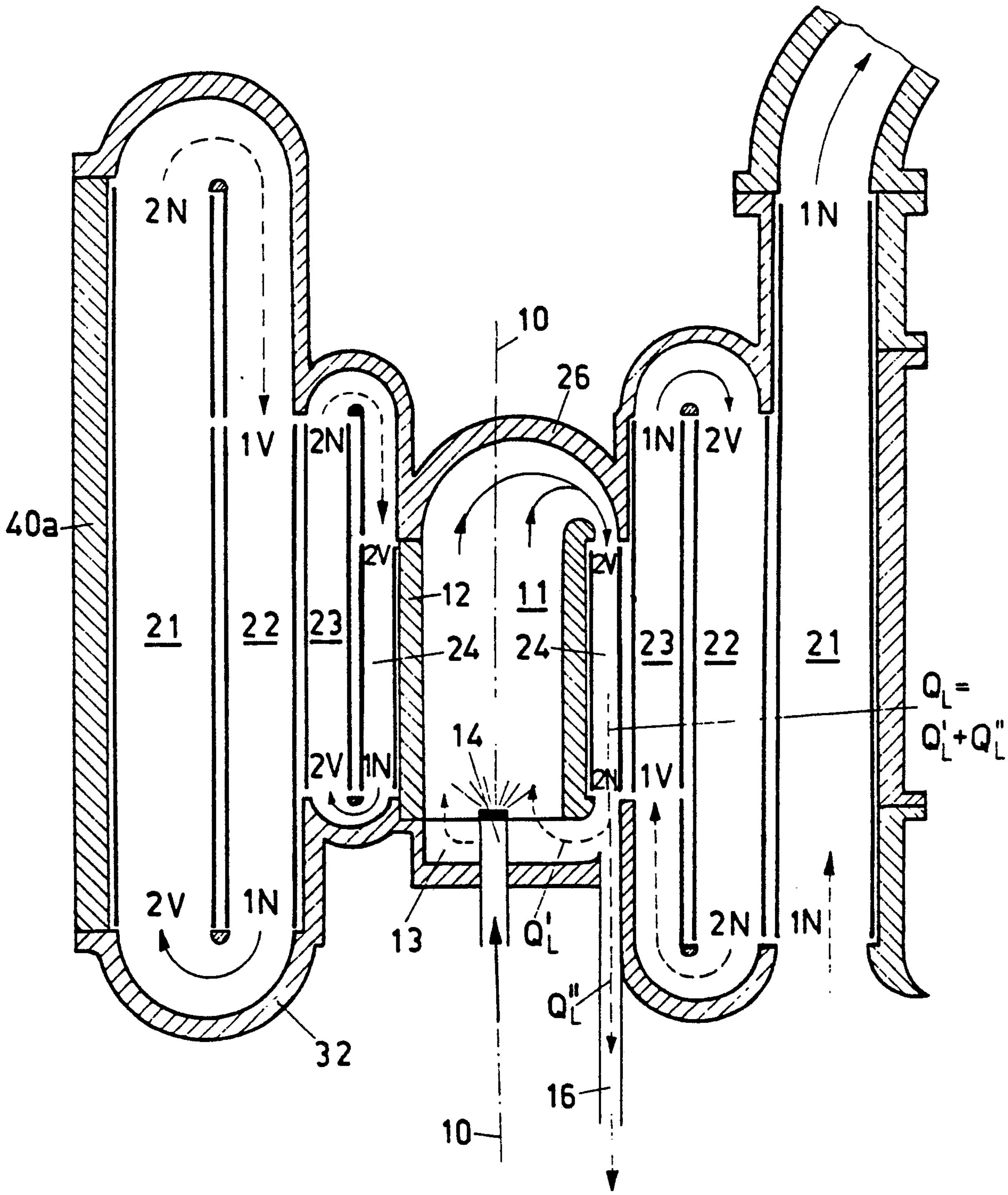
2N
1V
2V
1N
2N
2V
2V
1N
40a
21
22
23
24
10
26
12
11
24
14
13
$Q_L'$
$Q_L''$
16
10
32
1N
2V
2N
1V
23
22
21
$Q_L = Q_L' + Q_L''$
2N
1N
1N
1V
2V
2N

FIG. 8